(19) Europäisches Patentamt
European Patent Office
Office européen des brevets

(11) EP 3 418 051 B1

(12) **EUROPEAN PATENT SPECIFICATION**

(45) Date of publication and mention of the grant of the patent:
**13.01.2021 Bulletin 2021/02**

(21) Application number: **17753045.8**

(22) Date of filing: **08.02.2017**

(51) Int Cl.:
***B32B 27/36*** *(2006.01)* ***G06F 3/041*** *(2006.01)*
***B32B 27/08*** *(2006.01)* ***B32B 27/16*** *(2006.01)*
***B32B 27/18*** *(2006.01)* ***B32B 27/30*** *(2006.01)*

(86) International application number:
**PCT/JP2017/004570**

(87) International publication number:
**WO 2017/141787 (24.08.2017 Gazette 2017/34)**

(54) **TRANSPARENT RESIN LAMINATE**

TRANSPARENTES HARZLAMINAT

STRATIFIÉ DE RÉSINE TRANSPARENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2016 JP 2016025659**
**24.06.2016 JP 2016125853**

(43) Date of publication of application:
**26.12.2018 Bulletin 2018/52**

(73) Proprietors:
- **Mitsubishi Gas Chemical Company, Inc.**
  **Tokyo 100-8324 (JP)**
- **MGC Filsheet Co., Ltd.**
  **Saitama 359-1164 (JP)**

(72) Inventor: **HIRABAYASHI Masaki**
**Toyonaka-shi**
**Osaka 561-0823 (JP)**

(74) Representative: **Hoffmann Eitle**
**Patent- und Rechtsanwälte PartmbB**
**Arabellastraße 30**
**81925 München (DE)**

(56) References cited:
**WO-A1-2012/147880** **WO-A1-2015/079867**
**WO-A1-2015/178437** **WO-A1-2016/006589**
**WO-A1-2016/006589** **WO-A1-2016/158827**
**WO-A1-2017/094282** **JP-A- 2014 198 454**
**JP-A- 2014 198 454** **JP-A- 2016 155 274**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 418 051 B1

Printed by Jouve, 75001 PARIS (FR)

## Description

### TECHNICAL FIELD

The present invention relates to a resin laminate which can be used as a transparent base material or a transparent protective material, which has a polycarbonate-based resin layer and a thermoplastic resin layer containing at least two types of specific copolymers, which has excellent warping deformation resistance even under exposure to a high temperature and a high humidity, and where the effect of variation in the thickness of the surface layer on the warping deformation resistance is small.

### BACKGROUND ART

Acrylic resins are excellent in surface hardness, transparency, scratch resistance, weatherability. Meanwhile, polycarbonate resins are excellent in impact resistance. Therefore, a laminate having an acrylic resin layer and a polycarbonate resin layer is excellent in surface hardness, transparency, scratch resistance, weatherability and impact resistance, and is used as automobile parts, household electrical appliances, electronic equipments and display windows of portable data terminals. A laminate having an acrylic resin layer and a polycarbonate resin layer, however, has a problem of warpage when used outside or in a vehicle at a high temperature and a high humidity.

In order to solve the above-described problem, Patent document 1 (Japanese Unexamined Patent Application Publication No. 2014-198454) and Patent document 2 (International Publication No. WO2015/133530) report a laminate comprising: a surface layer made from a resin composition of a polymer alloy of a copolymer containing an aromatic vinyl monomer unit, a methacrylate ester monomer unit and a cyclic anhydride monomer unit, and an acrylic resin; and a layer made from a polycarbonate resin. Although this laminate has been reported to suppress warpage at a temperature and a humidity as high as 85°C and 85%, respectively, there is no mention of the effect of variation in the thickness of the surface layer on the warpage.

In addition to the above-described fact, the thickness of a surface layer of a transparent resin laminate may fluctuate upon extrusion molding. For example, the thickness of the surface layer precision upon continuous extrusion molding is ±8% with a feedblock and ±5% even with a multi-manifold die that provides better uniformity. Accordingly, even if a part of the transparent resin laminate may have satisfactory warping deformation resistance, the warping deformation resistance may be unsatisfactory as the whole transparent resin laminate.

### PRIOR ART DOCUMENTS

#### Patent documents

Patent document 1: Japanese Unexamined Patent Application Publication No. 2014-198454
Patent document 2: International Publication No. WO2015/13353 0.WO2015079867 discloses a transparent laminate.

### SUMMARY OF INVENTION

#### Problem to be solved by invention

The present invention has an objective of providing a resin laminate which can be used as a transparent base material or a transparent protective material, which has shape stability such that warpage can be prevented even under a high temperature and high humidity environment, and where the effect of variation in the thickness of the surface layer on the warping deformation resistance is small.

#### Means for solving problem

The present inventors have gone through keen studies to solve the above-described problem, and as a result of which found that a resin laminate which has shape stability at a high temperature and a high humidity and where the effect of variation in the thickness of the surface layer on the warping deformation resistance is small, can be obtained by laminating a thermoplastic resin (B) on at least one side of a polycarbonate-based resin (A) sheet having a polycarbonate resin as the main component, wherein said thermoplastic resin (B) comprises: a copolymer (b1) containing 45-85 mass% of an aromatic vinyl monomer unit, 5-50 mass% of an unsaturated dicarboxylic anhydride monomer unit and

5-35 mass% of an acrylic compound monomer unit; and either a copolymer (b2) containing 1-10 mass% of an aromatic vinyl monomer unit, 5-25 mass% of a N-substituted maleimide monomer unit and 65-94 mass% of an acrylic compound monomer unit, or a copolymer (b3) containing 5-40 mass% of an aromatic vinyl monomer unit, 1-50 mass% of an unsaturated dicarboxylic anhydride monomer unit and 45-94 mass% of an acrylic compound monomer unit, thereby accomplishing the present invention.

Thus, the present invention is characterized as follows.

[1] A resin laminate comprising a thermoplastic resin (B) and a polycarbonate-based resin (A) sheet comprising a polycarbonate resin as the main component, wherein the thermoplastic resin (B) is laminated on at least one side of the polycarbonate-based resin (A) sheet,
wherein the thermoplastic resin (B) comprises: a copolymer (b1) containing 45-85 mass% of an aromatic vinyl monomer unit, 5-50 mass% of an unsaturated dicarboxylic anhydride monomer unit and 5-35 mass% of an acrylic compound monomer unit; and either a copolymer (b2) containing 1-30 mass% of an aromatic vinyl monomer unit, 5-45 mass% of a N-substituted maleimide monomer unit and 25-94 mass% of an acrylic compound monomer unit, or a copolymer (b3) containing 5-40 mass% of an aromatic vinyl monomer unit, 1-50 mass% of an unsaturated dicarboxylic anhydride monomer unit and 45-94 mass% of an acrylic compound monomer unit.

[2] The resin laminate according to [1] above, wherein the content of the copolymer (b1) is 5-95 parts by mass, and the content of either the copolymer (b2) or the copolymer (b3) is 95-5 parts by mass, with respect to a total content of 100 parts by mass of the copolymer (b1) and either the copolymer (b2) or the copolymer (b3) in the thermoplastic resin (B).

[3] The resin laminate according to [1] or [2] above, wherein the thermoplastic resin (B) is a polymer alloy of the copolymer (b1) and either the copolymer (b2) or the copolymer (b3).

[4] The resin laminate according to any one of [1]-[3] above, wherein the aromatic vinyl monomer unit contained in the copolymers (b1), (b2) and (b3) is styrene.

[5] The resin laminate according to any one of [1]-[4] above, wherein the acrylic compound monomer unit contained in the copolymers (b1), (b2) and (b3) is methacrylate ester.

[6] The resin laminate according to any one of [1]-[5] above, wherein the N-substituted maleimide monomer unit contained in the copolymer (b2) is N-phenyl maleimide.

[7] The resin laminate according to any one of [1]-[6] above, wherein the unsaturated dicarboxylic anhydride monomer unit contained in the copolymers (b1) and (b3) is a maleic anhydride.

[8] The resin laminate according to any one of [1]-[7] above, wherein the thickness of the thermoplastic resin (B) layer is 10-250 μm and the total thickness of the resin laminate is in a range of 0.05-3.5 mm.

[9] The resin laminate according to any one of [1]-[8] above, wherein the proportion of the thickness of the thermoplastic resin (B) layer to the total thickness of the resin laminate is less than 30%.

[10] The resin laminate according to any one of [1]-[9] above, wherein the weight-average molecular weight (Mw) of the copolymers (b1) and (b2) is 50,000-300,000.

[11] The resin laminate according to any one of [1]-[10] above, wherein the weight-average molecular weight of the polycarbonate-based resin (A) is 15,000-75,000.

[12] The resin laminate according to any one of [1]-[11] above, wherein at least one of the thermoplastic resin (B) layer and the polycarbonate-based resin (A) layer contains an ultraviolet absorber.

[13] The resin laminate according to any one of [1]-[12] above, further comprising a hard coat layer on the surface of the thermoplastic resin (B) layer.

[14] The resin laminate according to any one of [1]-[13], wherein either or both sides of the resin laminate are subjected to one or more of an anti-fingerprint treatment, an anti-reflection treatment, an anti-glare treatment, a weatherability treatment, an antistatic treatment and an antifouling treatment.

[15] A transparent substrate material comprising the resin laminate according to any one of [1]-[14] above.

[16] A transparent protective material comprising the resin laminate according to any one of [1]-[14] above.

[17] A touch screen front panel protective plate comprising the resin laminate according to any one of [1]-[14] above.

[18] A front panel plate for an OA equipment or a portable electronic equipment, comprising the resin laminate according to any one of [1]-[14] above.

EFFECTS OF INVENTION

The present invention provides a resin laminate which has shape stability such as a warpage preventing property under a high temperature and high humidity environment and where the effect of variation in the thickness of the surface layer on the warping deformation resistance is small, where said resin laminate can be used as a transparent substrate material or a transparent protective material. Specifically, it can favorably be used, for example, as a front panel plate for protecting a portable-type display device such as a portable phone terminal, a portable electric toy, a portable

information terminal or a mobile PC, or an installation-type display device such as a notebook-type PC, a desktop-type PC, a liquid crystal monitor or a liquid crystal television.

BRIEF DESCRIPTION OF DRAWINGS

Figure 1 is a graph showing warpage variation under a high temperature and a high humidity with the difference in the thickness of the surface layer for transparent resin laminates according to one embodiment of the present invention and a transparent resin laminate according to a comparative example. As the copolymer (b1), (b1-1) was used.
Figure 2 is a graph showing warpage variation under a high temperature and a high humidity with the difference in the thickness of the surface layer for transparent resin laminates according to one embodiment of the present invention and a transparent resin laminate according to a comparative example. As the copolymer (b1), (b1-2) was used.
Figure 3 is a graph showing warpage variation under a high temperature and a high humidity with the difference in the thickness of the surface layer for transparent resin laminates according to one embodiment of the present invention and a transparent resin laminate according to a comparative example. As the copolymer (b1), (b1-3) was used.

DESCRIPTION OF THE EMBODIMENTS

The present invention relates to a resin laminate comprising a thermoplastic resin (B) and a polycarbonate-based resin (A) sheet comprising a polycarbonate resin as the main component, wherein the thermoplastic resin (B) is laminated on at least one side of the polycarbonate-based resin (A) sheet,wherein the thermoplastic resin (B) comprises: a copolymer (b1) containing 45-85 mass% of an aromatic vinyl monomer unit, 5-50 mass% of an unsaturated dicarboxylic anhydride monomer unit and 5-35 mass% of an acrylic compound monomer unit; and either a copolymer (b2) containing 1-30 mass% of an aromatic vinyl monomer unit, 5-45 mass% of aN-substituted maleimide monomer unit and 25-94 mass% of an acrylic compound monomer unit, or a copolymer (b3) containing 5-40 mass% of an aromatic vinyl monomer unit, 1-50 mass% of an unsaturated dicarboxylic anhydride monomer unit and 45-94 mass% of an acrylic compound monomer unit.

<Polycarbonate-based resin (A)>

A polycarbonate-based resin (A) used for the present invention has a polycarbonate resin as the main component. Herein, "having a polycarbonate resin as the main component" means that the content of the polycarbonate resin is more than 50 mass%. The polycarbonate-based resin (A) preferably contains 75 mass% or more of a polycarbonate resin, more preferably contains 90 mass% or more of a polycarbonate resin, and still more preferably is substantially composed of a polycarbonate resin. The polycarbonate-based resin (A) comprises a carbonate ester bond in the main chain of the molecule. Specifically, while it is not particularly limited as long as it contains a -[O-R-OCO]- unit (where, R represents one that includes an aliphatic group, an aromatic group or both aliphatic and aromatic groups, and further one having a linear chain structure or a branched structure), a polycarbonate containing a structural unit represented by Formula [1] below is particularly preferably used. By using such a polycarbonate, a resin laminate excellent in impact resistance can be obtained.

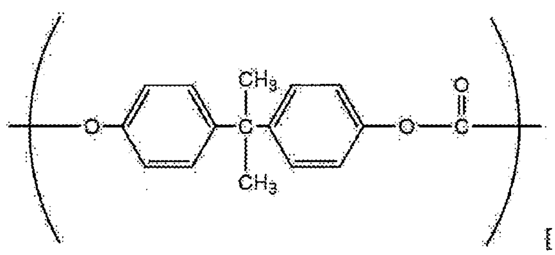

[1]

Specifically, as the polycarbonate-based resin (A), an aromatic polycarbonate resin (for example, Iupilon S-2000, Iupilon S-1000 and Iupilon E-2000 commercially available from Mitsubishi Engineering-Plastics) can be used. Regarding the recent increase in demands like bending the front panel plate, the polycarbonate-based resin (A) is preferably synthesized using a monohydric phenol represented by Formula [2] below as a terminating agent.

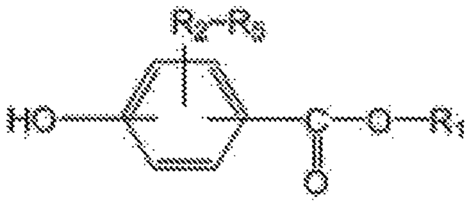

[2]

where, $R_1$ represents a C8-36 alkyl group or a C8-36 alkenyl group;
$R_2$-$R_5$ each represent hydrogen, halogen or an optionally substituted C1-20 alkyl group or C6-12 aryl group; and the substituent is halogen, a C1-20 alkyl group or a C6-12 aryl group.

The monohydric phenol represented by General formula [2] is more preferably a monohydric phenol represented by Formula [3] below.

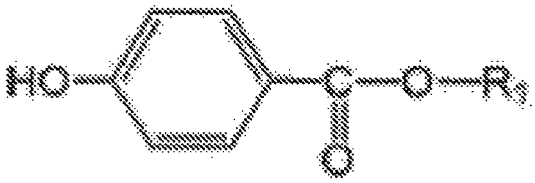

[3]

where, $R_1$ represents a C8-36 alkyl group or a C8-36 alkenyl group.

The carbon number of $R_1$ in General formula [2] or [3] is preferably within a specific numerical range. Specifically, the largest carbon number of $R_1$ is preferably 36, more preferably 22 and particularly preferably 18. Moreover, the smallest carbon number of $R_1$ is preferably 8 and more preferably 12.

Among the monohydric phenols (terminating agents) represented by General formula [2] or [3], either one or both of hexadecyl p-hydroxybenzoate and 2-hexyldecyl p-hydroxybenzoate are particularly preferably used as the terminating agent.

A monohydric phenol (terminating agent) having, for example, a C16 alkyl group as $R_1$ is used has excellent glass transition temperature, melt fluidity, moldability, draw down resistance and solvent solubility of the monohydric phenol upon production of the polycarbonate resin, and thus is particularly preferable as a terminating agent used for the present invention.

On the other hand, if the carbon number of $R_1$ in General formula [2] or [3] is too large, the organic solvent solubility of the monohydric phenol (terminating agent) is likely to decrease, which may cause decrease in the productivity upon producing the polycarbonate resin.

For example, if the carbon number of $R_1$ is 36 or less, productivity upon producing the polycarbonate resin can be high and thus is economical. If the carbon number of $R_1$ is 22 or less, the monohydric phenol would have particularly excellent organic solvent solubility and productivity upon producing the polycarbonate resin can be very high, further improving the economical efficiency.

If the carbon number of R1 in General formula [2] or [3] is too small, the glass transition temperature of the polycarbonate resin would not be low enough and the thermoforming property may be deteriorated.

The other resin contained in the polycarbonate-based resin (A) may be, for example, a polyester-based resin. As long as the polyester-based resin contains terephthalic acid, i.e., a dicarboxylic acid component, as the main component, it may also contain a dicarboxylic acid component other than terephthalic acid. For example, a polyester-based resin, so-called "PETG", obtained by polycondensation with a glycol component containing 20-40 (molar ratio) of 1,4-cyclohexanedimethanol with respect to 80-60 (molar ratio) of ethylene glycol as the main component (total molar ratio of 100) is preferable. Moreover, the polycarbonate-based resin (A) may contain a polyester carbonate-based resin having an ester bond and a carbonate bond in the polymer skeleton.

According to the present invention, the weight-average molecular weight of the polycarbonate-based resin (A) influences the impact resistance and the molding conditions of the resin laminate. Specifically, too small weight-average molecular weight is unfavorable since the impact resistance of the resin laminate is deteriorated. Too large weight-average molecular weight is unfavorable since excessive heat is required to layer a resin layer containing the polycarbonate-based resin (A). Since high temperature is required depending on the molding method, the polycarbonate-based resin (A) may be exposed to high temperature, which may adversely affect the heat stability thereof. The weight-average molecular weight of the polycarbonate-based resin (A) is preferably 15,000-75,000, more preferably 20,000-70,000, and still more preferably 25,000-65,000.

<Method for determining weight-average molecular weight of polycarbonate-based resin (A)>

The weight-average molecular weight of the polycarbonate-based resin (A) can be determined based on the description written in paragraphs 0061-0064 of Japanese Unexamined Patent Application Publication No. 2007-179018. The determination method will be described in detail hereinbelow.

[Table 1]

Table 1: Conditions for determining weight-average molecular weight

| | |
|---|---|
| Device | "Aliance" from Waters |
| Columns | "Shodex K-805L" (2 columns) from Showa Denko |
| Detector | UV detector: 254 nm |
| Eluent | Chloroform |

Subsequent to determination using polystyrene (PS) as a reference polymer, relationship between the elution time and the molecular weight of polycarbonate (PC) is determined by universal calibration method to obtain a calibration curve. Then, the elution curve (chromatogram) of PC is determined under the same conditions as those for the calibration curve to determine respective average molecular weights from the elution time (molecular weight) and the peak area (number of molecules) at that elution time. The weight-average molecular weight is expressed as follows provided that Ni represents the number of molecules of molecular weight Mi. Furthermore, the following conversion equation was used. (Weight-average molecular weight)

$$Mw = \Sigma\,(NiMi^2)/\Sigma\,(NiMi)$$

(Conversion equation)
$MPC = 0.47822MPS^{1.01470}$
Here, MPC represents the molecular weight of PC while MPS represents the molecular weight of PS.
A method for producing the polycarbonate-based resin (A) used for the present invention can suitably be selected, for example, from known phosgene method (interfacial polymerization method), transesterification method (melting method) according to the monomer used.

<Thermoplastic resin (B)>

The thermoplastic resin (B) used for the present invention contains a copolymer (b1) described below and either copolymer (b2) or copolymer (b3). Hereinafter, each of the constituent components will be described.

[Copolymer (b1)]

A copolymer (b1) contained in the thermoplastic resin (B) according to the present invention is a terpolymer including: an aromatic vinyl monomer unit for 45-85 mass%, preferably 50-75 mass% and more preferably 60-75 mass%; an unsaturated dicarboxylic anhydride monomer unit for 5-50 mass%, preferably 10-40 mass% and more preferably 12-30 mass%; and an acrylic compound monomer unit for 5-35 mass%, preferably 10-30 mass% and more preferably 15-25 mass%. Two or more types of copolymers can be used as the copolymer (b1).

[Copolymer (b2)]

A copolymer (b2) contained in the thermoplastic resin (B) according to the present invention is a terpolymer including: an aromatic vinyl monomer unit for 1-30 mass%, preferably 1-20 mass% and more preferably 1-10 mass%; a N-substituted maleimide monomer unit for 5-45 mass%, preferably 5-35 mass% and more preferably 5-25 mass%; and an acrylic compound monomer unit for 25-94 mass%, preferably 35-94 mass% and more preferably 45-94 mass%. Two or more types of copolymers can be used as the copolymer (b2).

[Copolymer (b3)]

A copolymer (b3) contained in the thermoplastic resin (B) according to the present invention is a terpolymer including: an aromatic vinyl monomer unit for 5-40 mass%, preferably 8-30 mass% and more preferably 10-20 mass%; an unsaturated dicarboxylic anhydride monomer unit for 1-50 mass%, preferably 1-30 mass% and more preferably 1-15 mass%; and an acrylic compound monomer unit for 45-94 mass%, preferably 55-92 mass% and more preferably 65-90 mass%. Two or more types of copolymers can be used as the copolymer (b3).

Although the copolymers (b1) and (b3) are both terpolymers including an aromatic vinyl monomer unit, an unsaturated dicarboxylic anhydride monomer unit and an acrylic compound monomer unit, they differ from each other in that the copolymer (b1) includes the aromatic vinyl monomer unit more than the acrylic compound monomer unit while the copolymer (b3) includes the acrylic compound monomer unit more than the aromatic vinyl monomer unit. By using such copolymers (b1) and (b3) having different composition ratios in combination, a resin laminate having better shape stability at a high temperature and high humidity, and the effect of variation in the thickness of the surface layer on the warping deformation resistance can be smaller than that having only one of them.

While the aromatic vinyl monomer of the copolymers (b1) and (b3) is not particularly limited and any known aromatic vinyl monomer can be used, examples include styrene, α-methylstyrene, o-methylstyrene, m-methylstyrene, p-methylstyrene, t-butylstyrene in terms of availability. Among them, styrene is particularly preferable in terms of compatibility. Two or more types of these aromatic vinyl monomers may be used as a mixture.

Examples of the unsaturated dicarboxylic anhydride monomer of the copolymers (b1) and (b3) include acid anhydrides such as maleic acid, itaconic acid, citraconic acid, aconitic acid where a maleic anhydride is preferable in terms of compatibility with an acrylic resin. Two or more types of these unsaturated dicarboxylic anhydride monomers can be used as a mixture.

The acrylic compound monomer of the copolymers (b1) and (b3) comprises acrylonitrile, metacrylonitrile, acrylic acid, methacrylic acid or (meth)acrylate ester. Examples of the (meth)acrylate ester include methyl acrylate, ethyl acrylate, n-butyl acrylate, 2-ethylhexyl acrylate, methyl methacrylate, ethyl methacrylate, n-butyl methacrylate and 2-ethylhexyl methacrylate. Among them, methyl methacrylate (MMA) is preferable in terms of compatibility with an acrylic resin. Two or more types of these acrylic compound monomers can be used as a mixture.

Examples of the N-substituted maleimide monomer of the copolymer (b2) include N-aryl maleimides such as N-phenyl maleimide, N-chlorophenyl maleimide, N-methylphenyl maleimide, N-naphthyl maleimide, N-hydroxyphenyl maleimide, N-methoxyphenyl maleimide, N-carboxyphenyl maleimide and N-nitrophenyl maleimide, N-tribromophenyl maleimide, where N-phenyl maleimide is preferable in terms of compatibility with an acrylic resin. Two or more types of these N-substituted maleimide monomers can be used as a mixture.

The weight-average molecular weight (Mw) of the copolymers (b1), (b2) and (b3) is preferably 50,000-300,000 and more preferably 100,000-200,000. If the weight-average molecular weight is 50,000-300,000, the compatibility between the copolymers (b1) and (b2) and the copolymers (b1) and (b3) would be good. The weight-average molecular weight (Mw), the number-average molecular weight (Mn) and the molecular weight distribution (Mw/Mn) can be determined by gel permeation chromatography using THF or chloroform as a solvent.

Preferably, the copolymer (b1) is 5-95 parts by mass while the copolymer (b2) is 95-5 parts by mass with respect to a total content of 100 parts by mass of the copolymers (b1) and (b2). More preferably, the copolymer (b1) is 10-90 parts by mass while the copolymer (b2) is 90-10 parts by mass. Still more preferably, the copolymer (b1) is 15-85 parts by mass while the copolymer (b2) is 85-15 parts by mass. Particularly preferably, the copolymer (b1) is 20-80 parts by mass while the copolymer (b2) is 80-20 parts by mass. Within this weight ratio, a thermoplastic resin (B) which has shape stability sufficient to prevent warpage even under a high temperature and high humidity environment and where the effect of the thickness of the surface layer on the warping deformation resistance is small can be obtained while retaining the transparency.

Preferably, the copolymer (b1) is 5-95 parts by mass while the copolymer (b3) is 95-5 parts by mass with respect to a total content of 100 parts by mass of the copolymers (b1) and (b3). More preferably, the copolymer (b1) is 5-70 parts by mass while the copolymer (b3) is 95-30 parts by mass. Still more preferably, the copolymer (b1) is 5-55 parts by mass while the copolymer (b3) is 95-45 parts by mass. Particularly preferably, the copolymer (b1) is 10-40 parts by mass while the copolymer (b3) is 90-60 parts by mass. Within this weight ratio, a thermoplastic resin (B) which has shape stability sufficient to prevent warpage even under a high temperature and high humidity environment and where the effect of the thickness of the surface layer on the warping deformation resistance is small can be obtained while retaining the transparency.

[Polymer alloy of copolymers (b1) and (b2)]

According to the present invention, the thermoplastic resin (B) is preferably a polymer alloy of copolymers (b1) and (b2). Herein, a polymer alloy refers to a composite material obtained by mixing two or more types of polymers. Such

a polymer alloy can be obtained by subjecting the polymers to mechanical mixing, melt mixing, solution mixing. In order to form a polymer alloy, the contents of the copolymers (b1) and (b2) are such that the copolymer (b1) is 1 part by mass or more and less than 99 parts by mass while the copolymer (b2) is more than 1 part by mass and 99 parts by mass or less, with respect to the total of 100 parts by weight of them. Preferably, the copolymer (b1) is 5-95 parts by mass while the copolymer (b2) is 95-5 parts by mass. More preferably, the copolymer (b1) is 10-90 parts by mass while the copolymer (b2) is 90-10 parts by mass.

[Polymer alloy of copolymers (b1) and (b3)]

According to the present invention, the thermoplastic resin (B) is preferably a polymer alloy of copolymers (b1) and (b3). Herein, a polymer alloy refers to a composite material obtained by mixing two or more types of polymers. Such a polymer alloy can be obtained by subjecting the polymers to mechanical mixing, melt mixing, solution mixing. In order to form a polymer alloy, the contents of the copolymers (b1) and (b3) are such that the copolymer (b1) is 1 part by mass or more and less than 99 parts by mass while the copolymer (b3) is more than 1 part by mass and 99 parts by mass or less, with respect to the total of 100 parts by weight of them. Preferably, the copolymer (b1) is 5-95 parts by mass while the copolymer (b3) is 95-5 parts by mass. More preferably, the copolymer (b1) is 5-55 parts by mass while the copolymer (b3) is 95-45 parts by mass.

<Methods for producing respective materials>

A method for producing a synthetic resin laminate of the present invention is not particularly limited. While various methods, for example, a method in which a separately formed thermoplastic resin layer (B) and polycarbonate-based resin layer (A) are laminated and heat-pressed, a method in which separately formed thermoplastic resin layer (B) and polycarbonate-based resin layer (A) are laminated and bonded with an adhesive, a method in which a thermoplastic resin (B) layer and a polycarbonate-based resin (A) layer are coextruded or a method in which a polycarbonate-based resin (A) is subjected to in-mold molding with a preformed thermoplastic resin (B) layer to be integrated therewith, are available, a coextrusion method is preferable in terms of production cost and productivity.

According to the present invention, a method for producing the thermoplastic resin (B) is not particularly limited. A known method, for example, a method in which necessary components are mixed in advance using a mixer such as a tumbler, a Henschel mixer or a Super mixer, and then melt kneaded with a machine such as a Banbury mixer, a roll, a Brabender, a single-screw extruder, a twin-screw extruder or a pressure kneader, can be applied.

< Resin laminate>

According to the present invention, the thickness of the thermoplastic resin (B) layer affects the surface hardness and the impact resistance of the resin laminate. In other words, if the thermoplastic resin (B) layer is too thin, the surface hardness will be weak and thus unfavorable. If the thermoplastic resin (B) layer is too thick, the impact resistance is deteriorated and thus unfavorable. The thickness of the thermoplastic resin (B) layer is preferably 10-250 $\mu$m, more preferably 30-200 $\mu$m and still more preferably 60-150 $\mu$m.

According to the present invention, the total thickness of the resin laminate (sheet) and the thickness of the thermoplastic resin (B) layer affect the warpage of the resin laminate under a high temperature and high humidity environment. In other words, if the total thickness is small and thus the relative thickness of the thermoplastic resin (B) layer is large, warpage under a high temperature and high humidity environment becomes large, whereas if the total thickness is large and thus the relative thickness of the thermoplastic resin (B) layer is small, warpage under a high temperature and high humidity environment tends to be small. Specifically, the total thickness of the polycarbonate-based resin (A) layer and the thermoplastic resin (B) layer is preferably 0.05-3.5 mm, more preferably 0.1-3.0 mm and still more preferably 0.12-2.5 mm, while the ratio of the thermoplastic resin (B) layer with respect to the total thickness of the polycarbonate-based resin (A) layer and the thermoplastic resin (B) layer is preferably less than 30%, more preferably less than 25%, still more preferably less than 20% and particularly preferably less than 15%.

<Optional additives>

According to the present invention, the polycarbonate-based resin (A) forming the base layer and/or the thermoplastic resin (B) forming the surface layer may contain a component other than the above-described main components.

For example, the polycarbonate-based resin (A) and/or the thermoplastic resin (B) may be mixed with an ultraviolet absorber. If the content of the ultraviolet absorber is too much, the excess ultraviolet absorber may scatter and contaminate the environment at a high temperature depending on the molding method, which may be troublesome. Accordingly, the proportion of the ultraviolet absorber contained is preferably 0-5 mass%, more preferably 0-3 mass%

and still more preferably 0-1 mass%. Examples of the ultraviolet absorber include benzophenone-based ultraviolet absorbers such as 2,4-dihydroxybenzophenone, 2-hydroxy-4-methoxybenzophenone, 2-hydroxy-4-n-octoxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone and 2,2',4,4'-tetrahydroxybenzophenone; benzotriazole-based ultraviolet absorbers such as 2-(2-hydroxy-5-methylphenyl)benzotriazole, 2-(2-hydroxy-3,5-di-t-butylphenyl)benzotriazole, 2-(2-hydroxy-3-t-butyl-5-methylphenyl)benzotriazole and (2H-benzotriazole-2-yl)-4,6-bis(1-methyl-1-phenylethyl)phenol; benzoate-based ultraviolet absorbers such as phenyl salicylate and 2,4-di-t-butylphenyl-3,5-di-t-butyl-4-hydroxybenzoate; hindered amine-based ultraviolet absorbers such as bis(2,2,6,6-tetramethylpiperidine-4-yl)sebacate; and triazine-based ultraviolet absorbers such as 2,4-diphenyl-6- (2-hydroxy-4-methoxyphenyl)-1,3,5-triazine, 2,4-diphenyl-6- (2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine and 2,4-diphenyl-6-(2-hydroxy-4-benzyloxyphenyl)-1,3,5-triazine. While the method of mixing is not particularly limited, a method of compounding the whole amount, a method of dry blending a masterbatch, a method of dry blending the whole amount can be employed.

According to the present invention, the polycarbonate-based resin (A) forming the base layer and/or the thermoplastic resin (B) forming the surface layer may be blended with various additives besides the above-described ultraviolet absorber. Examples of such additives include an antioxidant, an anti-discoloring agent, an antistatic agent, a mold release agent, a lubricant, a dye, a pigment, a plasticizer, a flame retardant, a resin modifier, a compatibilizer and a reinforcing material such as an organic filler and an inorganic filler. While the method of mixing is not particularly limited, a method of compounding the whole amount, a method of dry blending a masterbatch, a method of dry blending the whole amount can be employed.

<Optional treatment>

According to the present invention, the surface of the thermoplastic resin (B) layer or the surface of the polycarbonate-based resin (A) layer may be subjected to a hard coat treatment. For example, a hard coat layer is formed by a hard coat treatment using a hard coat coating material that can be cured with thermal energy and/or light energy. Examples of the hard coat coating material cured with thermal energy include polyorganosiloxane-based and crosslinkable acrylic thermosetting resin compositions. In addition, examples of the hard coat coating material cured with light energy include a photocurable resin composition which is obtained by adding a photopolymerization initiator to a resin composition having a monofunctional and/or polyfunctional acrylate monomer and/or oligomer.

Examples of the hard coat coating material that can be cured with light energy and that can be provided on the surface of the thermoplastic resin (B) layer or the surface of the polycarbonate-based resin (A) layer of the present invention include a photocurable resin composition which can be obtained by adding 1-10 parts by mass of a photopolymerization initiator to 100 parts by mass of a resin composition including 20-60 mass% of 1,9-nonanediol diacrylate, and 40-80 mass% of a compound including a bifunctional or higher polyfunctional (meth)acrylate monomer, and a bifunctional or higher polyfunctional urethane (meth)acrylate oligomer and/or a bifunctional or higher polyfunctional polyester (meth)acrylate oligomer and/or a bifunctional or higher polyfunctional epoxy (meth)acrylate oligomer that can copolymerize with 1,9-nonanediol diacrylate.

According to the present invention, a method for applying the hard coat coating material is not particularly limited and any known method can be employed. Examples include spin coating, dip coating, spray coating, slide coating, bar coating, roll coating, gravure coating, meniscus coating, flexographic printing, screen printing, beads coating and brush coating.

For the purpose of enhancing adhesion of the hard coat, the surface to be applied with the hard coat can be pretreated before hard coat coating. Examples of the treatment include known methods such as sandblasting, a solvent treatment, a corona discharge treatment, a chromic acid treatment, a flame treatment, a hot air treatment, an ozone treatment, an ultraviolet treatment and a primer treatment with a resin composition.

The materials of the thermoplastic resin (B) layer, the polycarbonate-based resin (A) layer and the hard coat of the present invention such as a thermoplastic resin (B) and a polycarbonate-based resin (A), are preferably filtrated to be purified by a filter treatment. Production or lamination after filtration can give a synthetic resin laminate with less appearance defects like foreign substances and faults. The filtration method is not particularly limited, and melt filtration, solution filtration, a combination thereof can be employed.

The filter used is not particularly limited and a known filter can be used which can suitably be selected according to the usage temperature, viscosity and filtration precision of each material. While the filtrating material of the filter is not particularly limited, it may preferably be any of nonwoven fabric of polypropylene, cotton, polyester, viscose rayon or glass fiber, or roving yarn roll, phenol resin-impregnated cellulose, a sintered nonwoven metal fiber fabric compact, a sintered metal powder compact, a breaker plate or a combination thereof. In terms of heat resistance, durability and

pressure resistance, a sintered nonwoven metal fiber fabric compact is particularly preferable.

For the polycarbonate-based resin (A), the filtration precision is 50 μm or less, preferably 30 μm or less and more preferably 10 μm or less. The filtration precision of the hard coat agent is 20 μm or less, preferably 10 μm or less and more preferably 5 μm or less since it is applied on the outermost layer of the resin laminate.

For filtration of the thermoplastic resin (B) and the polycarbonate-based resin (A), for example, a polymer filter used for melt filtration of a thermoplastic resin is preferably used. While polymer filters can be classified into a leaf disc filter, a candle filter, a pack disc filter, a cylindrical filter according to their structures, a leaf disc filter having a large effective filtration area is particularly favorable.

Either or both sides of the resin laminate of the present invention can be subjected to any one or more of an anti-fingerprint treatment, an anti-reflection treatment, an antifouling treatment, an antistatic treatment, a weatherability treatment and an anti-glare treatment. The methods for the anti-reflection treatment, the antifouling treatment, the antistatic treatment, the weatherability treatment and the anti-glare treatment are not particularly limited, and any known method can be employed. For example, a method of applying a reflection reduction coating material, a method of depositing a dielectric thin film, a method of applying an antistatic coating material can be exemplified.

EXAMPLES

Hereinafter, the present invention will be described specifically by way of examples. The present invention, however, should not in any way be limited to these examples.

Determination of the physical properties of the laminated resins obtained in the production examples and evaluations of the synthetic resin laminates obtained in the examples and the comparative examples were conducted as follows.

<Warpage test under high temperature and high humidity environment>

A 10-cm long and 6-cm wide test piece was cut out from near the center of the resin laminate. The test piece was mounted on a two-point support holder and placed in an environmental testing machine set at a temperature of 23°C and a relative humidity of 50% for 24 hours or longer to adjust the conditions and then determine the warpage. The acquired value was taken as the warpage value before the treatment. Subsequently, the test piece was mounted on the holder and placed in an environmental testing machine set at a temperature of 85°C and a relative humidity of 85% and left in that condition for 120 hours. Furthermore, the holder as a whole was transferred into an environmental testing machine set at a temperature of 23°C and a relative humidity of 50%, left in that condition for 4 hours and then the warpage was again determined. The acquired value was taken as the warpage value after the treatment. The warpage was determined using a three-dimensional shape measuring machine that was provided with an electric stage, where the taken out test piece was horizontally placed thereon with the convex side facing upward so as to be scanned at intervals of 1 mm to measure the elevation at the center as the warpage. The difference in the warpage before and after the treatment, that is, (warpage after the treatment) - (warpage before the treatment), was evaluated as warpage variation. In this regard, evaluation was represented by symbol "-" when the convex side was on the thermoplastic resin (B) layer side and symbol "+" when the convex side was on the polycarbonate-based resin (A) layer side. Furthermore, warpage can hardly be recognized with the naked eye when the absolute value of the warpage variation was 700 μm or less and thus warping deformation resistance was judged to be excellent in this case.

<Examples of respective materials>

The following materials are exemplified as the polycarbonate-based resin (A) and the copolymers (b1), (b2) and (b3) but they should not be limited thereto.

A-1: Polycarbonate resin: Iupilon E-2000 from Mitsubishi Engineering-Plastics
b1-1: Copolymer (b1): R100 from Denka
b1-2: Copolymer (b1): KX-422 from Denka
b1-3: Copolymer (b1): R200 from Denka
b2-1: Copolymer (b2): DELPET PM120N from Asahi Kasei
b3-1: Copolymer (b3): DELPET 980N from Asahi Kasei
b3-2: Copolymer (b3): PLEXIGLAS hw55 from Daicel-Evonik
b4-1: Acrylic resin: Methyl methacrylate resin Parapet HR-L from Kuraray

Production example 1 [Production of resin (B11) pellets]

To 75 parts by mass of R100 (b1-1) (mass ratio of styrene:maleic anhydride:MMA = 65:15:20, weight-average molecular weight: 170,000) as a copolymer (b1) and 25 parts by mass of DELPET PM120N (b2-1) (mass ratio of styrene:N-phenyl maleimide:MMA = 4:15:81, weight-average molecular weight: 113,000) as a copolymer (b2), i.e., a total of 100 parts by mass, 500 ppm of a phosphorus-based additive PEP-36 (from ADEKA) and 0.2 mass% of glycerol monostearate (product name: H-100, from Riken Vitamin) were added and mixed with a blender for 20 minutes. The resultant was melt kneaded with a twin-screw extruder with a screw diameter of 26 mm (TEM-26SS, L/D ≈ 40, from Toshiba Machine) at a cylinder temperature of 240°C to be extruded into a strand and pelletized with a pelletizer. The pellets were stably produced.

Production example 2 [Production of resin (B12) pellets]

To 60 parts by mass of KX-422 (b1-2) (mass ratio of styrene:maleic anhydride:MMA = 57:23:20, weight-average molecular weight: 119,000) as a copolymer (b1) and 40 parts by mass of DELPET PM120N (b2-1) as a copolymer (b2), i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Production example 3 [Production of resin (B13) pellets]

To 60 parts by mass of R200 (b1-3) (mass ratio of styrene:maleic anhydride:MMA = 55:20:25, weight-average molecular weight: 185,000) as a copolymer (b1) and 40 parts by mass of PM120N (b2-1) as a copolymer (b2), i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Production example 4 [Production of resin (B14) pellets]

To 30 parts by mass of R100 (b1-1) as a copolymer (b1) and 70 parts by mass of DELPET 980N (b3-1) (mass ratio of styrene:maleic anhydride:MMA = 16:8:76, weight-average molecular weight: 133,000) as a copolymer (b3), i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Production example 5 [Production of resin (B15) pellets]

To 20 parts by mass of KX-422 (b1-2) as a copolymer (b1) and 80 parts by mass of DELPET 980N (b3-1) as a copolymer (b3), i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Production example 6 [Production of resin (B16) pellets]

To 20 parts by mass of R200 (b1-3) as a copolymer (b1) and 80 parts by mass of DELPET 980N (b3-1) as a copolymer (b3), i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Production example 7 [Production of resin (B17) pellets]

To 30 parts by mass of R100 (b1-1) as a copolymer (b1) and 70 parts by mass of PLEXIGLAS hw55 (b3-2) (mass ratio of styrene:maleic anhydride:MMA = 15:9:76, weight-average molecular weight: 141,000) as a copolymer (b3), i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Production example 8 [Production of resin (B18) pellets]

To 20 parts by mass of KX-422 (b1-2) as a copolymer (b1) and 80 parts by mass of PLEXIGLAS hw55 (b3-2) as a copolymer (b3), i.e., a total of 100 parts by mass, 500ppm of a phosphorus-based additive PEP-36 and 0.2 mass% of glycerol monostearate were added, and then mixed and pelletized in the same manner as Production example 1. The pellets were stably produced.

Production example 9 [Production of resin (B19) pellets]

To 20 parts by mass of R200 (b1-3) as a copolymer (b1) and 80 parts by mass of PLEXIGLAS hw55 (b3-2) as a copolymer (b3), i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Comparative production example 1 [Production of resin (D11) pellets]

To 75 parts by mass of R100 (b1-1) as a copolymer (b1) and 25 parts by mass of Parapet HR-L (100% methyl methacrylate resin, weight-average molecular weight: 90,000) (b4-1) as a methyl methacrylate resin, i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Comparative production example 2 [Production of resin (D12) pellets]

To 60 parts by mass of KX-422 (b1-2) as a copolymer (b1) and 40 parts by mass of Parapet HR-L (b4-1) as a methyl methacrylate resin, i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Comparative production example 3 [Production of resin (D13) pelletsl

To 60 parts by mass of R200 (b1-3) as a copolymer (b1) and 40 parts by mass of Parapet HR-L (b4-1) as a methyl methacrylate resin, i.e., a total of 100 parts by mass, 500 ppm of a phosphorus-based additive PEP-36 and 0.2 mass% of glycerol monostearate were added, and then mixed and pelletized in the same manner as Production example 1. The pellets were stably produced.

Example 1

A multilayer extruder having a single-screw extruder with a screw diameter of 32 mm, a single-screw extruder with a screw diameter of 65 mm, a feedblock connected with all extruders and a T-die connected with the feedblock as a multilayer extrusion device having a multi-manifold die connected with the respective extruders were used to mold a resin laminate. The resin (B11) obtained in Production example 1 was continuously introduced into the single-screw extruder with a screw diameter of 32 mm, and extruded at a cylinder temperature of 240°C and a discharge rate of 1.5 kg/h. Meanwhile, a polycarbonate resin (A-1) (from Mitsubishi Engineering-Plastics, product name: Iupilon E-2000, weight-average molecular weight: 34,000) was continuously introduced into the single-screw extruder with a screw diameter of 65 mm, and extruded at a cylinder temperature of 280°C and a discharge rate of 30.6 kg/h. The feedblock connected with all extruders was provided with a 2-type/2-layer distribution pin set at a temperature of 270°C, into which the resin (B11) and the polycarbonate resin (A-1) were introduced to be laminated. The resultant was extruded into a sheet with the T-die connected ahead set at a temperature of 270°C, and cooled while being transferred with a mirror surface with three mirror-finishing rolls set at temperatures of 130°C, 140°C and 180°C from the upstream side to give a laminate (E11) of the resin (B11) and the polycarbonate resin (A-1). The total thickness of the laminate (E11) was 1000 μm, the thickness near the center of the surface layer was 40 μm, and the warpage variation under a high temperature and high humidity environment was -38 μm.

In addition, a laminate (E12) was obtained under the same molding conditions as those for the laminate (E11) except that the discharge rate of the resin (B11) was 1.8 kg/h and the discharge rate of the polycarbonate resin (A-1) was 30.3 kg/h. The total thickness of the laminate (E12) was 1000 μm, the thickness near the center of the surface layer was 50 μm, and the warpage variation under a high temperature and high humidity environment was -53 μm.

Similarly, a laminate (E13) was obtained under the same molding conditions as those for the laminate (E11) except that the discharge rate of the resin (B11) was 2.1 kg/h and the discharge rate of the polycarbonate resin (A-1)

was 30.0 kg/h. The total thickness of the laminate (E13) was 1000 μm, the thickness near the center of the surface layer was 60 μm, and the warpage variation under a high temperature and high humidity environment was -65 μm.

Similarly, a laminate (E14) was obtained under the same molding conditions as those for the laminate (E11) except that the discharge rate of the resin (B11) was 2.4 kg/h and the discharge rate of the polycarbonate resin (A-1) was 29.6 kg/h. The total thickness of the laminate (E14) was 1000 μm, the thickness near the center of the surface layer was 70 μm, and the warpage variation under a high temperature and high humidity environment was -76 μm.

Example 2

A laminate (E15) of a resin (B12) and the polycarbonate resin (A-1) was obtained in the same manner as the laminate (E11) obtained in Example 1 except that the resin (B12) was used instead of the resin (B11). The total thickness of the resulting laminate (E15) was 1000 μm, the thickness near the center of the surface layer was 40 μm, and the warpage variation under a high temperature and high humidity environment was +138 μm.

In addition, a laminate (E16) of the resin (B12) and the polycarbonate resin (A-1) was obtained in the same manner as the laminate (E12) obtained in Example 1 by using the resin (B12) instead of the resin (B11). The total thickness of the resulting laminate (E16) was 1000 μm, the thickness near the center of the surface layer was 50 μm, and the warpage variation under a high temperature and high humidity environment was +65 μm.

Similarly, a laminate (E17) of the resin (B12) and the polycarbonate resin (A-1) was obtained in the same manner as the laminate (E13) obtained in Example 1 by using the resin (B12) instead of the resin (B11). The total thickness of the resulting laminate (E17) was 1000 μm, the thickness near the center of the surface layer was 60 μm, and the warpage variation under a high temperature and high humidity environment was +7 μm.

Similarly, a laminate (E18) of the resin (B12) and the polycarbonate resin (A-1) was obtained in the same manner as the laminate (E14) obtained in Example 1 by using the resin (B12) instead of the resin (B11). The total thickness of the resulting laminate (E18) was 1000 μm, the thickness near the center of the surface layer was 70 μm, and the warpage variation under a high temperature and high humidity environment was -55 μm.

Example 3

A laminate (E19) of a resin (B13) and the polycarbonate resin (A-1) was obtained in the same manner as the laminate (E11) obtained in Example 1 except that the resin (B13) was used instead of the resin (B11). The total thickness of the resulting laminate (E19) was 1000 μm, the thickness near the center of the surface layer was 40 μm, and the warpage variation under a high temperature and high humidity environment was -57 μm.

In addition, laminate (E20) of the resin (B13) and the polycarbonate resin (A-1) was obtained in the same manner as the laminate (E12) obtained in Example 1 by using the resin (B13) instead of the resin (B11). The total thickness of the resulting laminate (E20) was 1000 μm, the thickness near the center of the surface layer was 50 μm, and the warpage variation under a high temperature and high humidity environment was -98 μm.

Similarly, a laminate (E21) of the resin (B13) and the polycarbonate resin (A-1) was obtained in the same manner as the laminate (E13) obtained in Example 1 by using the resin (B13) instead of the resin (B11). The total thickness of the resulting laminate (E21) was 1000 μm, the thickness near the center of the surface layer was 60 μm, and the warpage variation under a high temperature and high humidity environment was -135 μm.

Similarly, a laminate (E22) of the resin (B13) and the polycarbonate resin (A-1) was obtained in the same manner as the laminate (E14) obtained in Example 1 by using the resin (B13) instead of the resin (B11). The total thickness of the resulting laminate (E22) was 1000 μm, the thickness near the center of the surface layer was 70 μm, and the warpage variation under a high temperature and high humidity environment was -194 μm.

Example 4

A laminate (E23) of a resin (B14) and the polycarbonate resin (A-1) was obtained in the same manner as the laminate (E11) obtained in Example 1 except that a resin (B14) was used instead of the resin (B11). The total thickness of the resulting laminate (E23) was 1000 μm. the thickness near the center of the surface layer was 40 μm, and the warpage variation under a high temperature and high humidity environment was +28 μm.

In addition, a laminate (E24) of the resin (B14) and the polycarbonate resin (A-1) was obtained in the same manner as the laminate (E12) obtained in Example 1 by using the resin (B14) instead of the resin (B11). The total thickness of the resulting laminate (E24) was 1000 μm, the thickness near the center of the surface layer was 50 μm, and the warpage variation under a high temperature and high humidity environment was +12 μm.

Similarly, a laminate (E25) of the resin (B14) and the polycarbonate resin (A-1) was obtained in the same manner as the laminate (E13) obtained in Example 1 by using the resin (B14) instead of the resin (B11). The total thickness of the resulting laminate (E25) was 1000 μm, the thickness near the center of the surface layer was 60 μm,

and the warpage variation under a high temperature and high humidity environment was -8 μm.

Similarly, a laminate (E26) of the resin (B14) and the polycarbonate resin (A-1) was obtained in the same manner as the laminate (E14) obtained in Example 1 by using the resin (B14) instead of the resin (B11). The total thickness of the resulting laminate (E26) was 1000 μm, the thickness near the center of the surface layer was 70 μm, and the warpage variation under a high temperature and high humidity environment was -21 μm.

Example 5

A laminate (E27) of a resin (B15) and the polycarbonate resin (A-1) was obtained in the same manner as the laminate (E11) obtained in Example 1 except that the resin (B15) was used instead of the resin (B11). The total thickness of the resulting laminate (E27) was 1000 μm, the thickness near the center of the surface layer was 40 μm, and the warpage variation under a high temperature and high humidity environment was +12 μm.

In addition, a laminate (E28) of the resin (B15) and the polycarbonate resin (A-1) was obtained in the same manner as the laminate (E12) obtained in Example 1 by using the resin (B15) instead of the resin (B11). The total thickness of the resulting laminate (E28) was 1000 μm, the thickness near the center of the surface layer was 50 μm, and the warpage variation under a high temperature and high humidity environment was -28 μm.

Similarly, a laminate (E29) of the resin (B15) and the polycarbonate resin (A-1) was obtained in the same manner as the laminate (E13) obtained in Example 1 by using the resin (B15) instead of the resin (B11). The total thickness of the resulting laminate (E29) was 1000 μm, the thickness near the center of the surface layer was 60 μm, and the warpage variation under a high temperature and high humidity environment was -40 μm.

Similarly, a laminate (E30) of the resin (B15) and the polycarbonate resin (A-1) was obtained in the same manner as the laminate (E14) obtained in Example 1 by using the resin (B15) instead of the resin (B11). The total thickness of the resulting laminate (E30) was 1000 μm, the thickness near the center of the surface layer was 70 μm, and the warpage variation under a high temperature and high humidity environment was -75 μm.

Example 6

A laminate (E31) of a resin (B16) and the polycarbonate resin (A-1) was obtained in the same manner as the laminate (E11) obtained in Example 1 except that the resin (B16) was used instead of the resin (B11). The total thickness of the resulting laminate (E31) was 1000 μm, the thickness near the center of the surface layer was 40 μm, and the warpage variation under a high temperature and high humidity environment was +47 μm.

In addition, a laminate (E32) of the resin (B16) and the polycarbonate resin (A-1) was obtained in the same manner as the laminate (E12) obtained in Example 1 by using the resin (B16) instead of the resin (B11). The total thickness of the resulting laminate (E32) was 1000 μm, the thickness near the center of the surface layer was 50 μm, and the warpage variation under a high temperature and high humidity environment was +28 μm.

Similarly, a laminate (E33) of the resin (B16) and the polycarbonate resin (A-1) was obtained in the same manner as the laminate (E13) obtained in Example 1 by using the resin (B16) instead of the resin (B11). The total thickness of the resulting laminate (E33) was 1000 μm, the thickness near the center of the surface layer was 60 μm, and the warpage variation under a high temperature and high humidity environment was +1 μm.

Similarly, a laminate (E34) of the resin (B16) and the polycarbonate resin (A-1) was obtained in the same manner as the laminate (E14) obtained in Example 1 by using the resin (B16) instead of the resin (B11). The total thickness of the resulting laminate (E34) was 1000 μm, the thickness near the center of the surface layer was 70 μm, and the warpage variation under a high temperature and high humidity environment was -48 μm.

Example 7

A laminate (E35) of a resin (B17) and the polycarbonate resin (A-1) was obtained in the same manner as the laminate (E11) obtained in Example 1 except that the resin (B17) was used instead of the resin (B11). The total thickness of the resulting laminate (E35) was 1000 μm, the thickness near the center of the surface layer was 40 μm, and the warpage variation under a high temperature and high humidity environment was +25 μm.

In addition, a laminate (E36) of the resin (B17) and the polycarbonate resin (A-1) was obtained in the same manner as the laminate (E12) obtained in Example 1 by using the resin (B17) instead of the resin (B11). The total thickness of the resulting laminate (E36) was 1000 μm, the thickness near the center of the surface layer was 50 μm, and the warpage variation under a high temperature and high humidity environment was +12 μm.

Similarly, a laminate (E37) of the resin (B17) and the polycarbonate resin (A-1) was obtained in the same manner as the laminate (E13) obtained in Example 1 by using the resin (B17) instead of the resin (B11). The total thickness of the resulting laminate (E37) was 1000 μm, the thickness near the center of the surface layer was 60 μm, and the warpage variation under a high temperature and high humidity environment was -19 μm.

Similarly, a laminate (E38) of the resin (B17) and the polycarbonate resin (A-1) was obtained in the same manner as the laminate (E14) obtained in Example 1 by using the resin (B17) instead of the resin (B11). The total thickness of the resulting laminate (E38) was 1000 μm, the thickness near the center of the surface layer was 70 μm, and the warpage variation under a high temperature and high humidity environment was -31 μm.

Example 8

A laminate (E39) of a resin (B18) and the polycarbonate resin (A-1) was obtained in the same manner as the laminate (E11) obtained in Example 1 except that the resin (B18) was used instead of the resin (B11). The total thickness of the resulting laminate (E39) was 1000 μm, the thickness near the center of the surface layer was 40 μm, and the warpage variation under a high temperature and high humidity environment was +18 μm.

In addition, a laminate (E40) of the resin (B18) and the polycarbonate resin (A-1) was obtained in the same manner as the laminate (E12) obtained in Example 1 by using the resin (B18) instead of the resin (B11). The total thickness of the resulting laminate (E40) was 1000 μm, the thickness near the center of the surface layer was 50 μm, and the warpage variation under a high temperature and high humidity environment was -4 μm.

Similarly, a laminate (E41) of the resin (B18) and the polycarbonate resin (A-1) was obtained in the same manner as the laminate (E13) obtained in Example 1 by using the resin (B18) instead of the resin (B11). The total thickness of the resulting laminate (E41) was 1000 μm, the thickness near the center of the surface layer was 60 μm, and the warpage variation under a high temperature and high humidity environment was -33 μm.

Similarly, a laminate (E42) of the resin (B18) and the polycarbonate resin (A-1) was obtained in the same manner as the laminate (E14) obtained in Example 1 by using the resin (B18) instead of the resin (B11). The total thickness of the resulting laminate (E42) was 1000 μm, the thickness near the center of the surface layer was 70 μm, and the warpage variation under a high temperature and high humidity environment was -72 μm.

Example 9

A laminate (E43) of a resin (B19) and the polycarbonate resin (A-1) was obtained in the same manner as the laminate (E11) obtained in Example 1 except that the resin (B19) was used instead of the resin (B11). The total thickness of the resulting laminate (E43) was 1000 μm, the thickness near the center of the surface layer was 40 μm, and the warpage variation under a high temperature and high humidity environment was +37 μm.

In addition, a laminate (E44) of the resin (B19) and the polycarbonate resin (A-1) was obtained in the same manner as the laminate (E12) obtained in Example 1 by using the resin (B19) instead of the resin (B11). The total thickness of the resulting laminate (E44) was 1000 μm, the thickness near the center of the surface layer was 50 μm, and the warpage variation under a high temperature and high humidity environment was +18 μm.

Similarly, a laminate (E45) of the resin (B19) and the polycarbonate resin (A-1) was obtained in the same manner as the laminate (E13) obtained in Example 1 by using the resin (B19) instead of the resin (B11). The total thickness of the resulting laminate (E45) was 1000 μm, the thickness near the center of the surface layer was 60 μm, and the warpage variation under a high temperature and high humidity environment was -35 μm.

Similarly, a laminate (E46) of the resin (B19) and the polycarbonate resin (A-1) was obtained in the same manner as the laminate (E14) obtained in Example 1 by using the resin (B19) instead of the resin (B11). The total thickness of the resulting laminate (E46) was 1000 μm, the thickness near the center of the surface layer was 70 μm, and the warpage variation under a high temperature and high humidity environment was -69 μm.

Comparative example 1

A laminate (F11) of a resin (D11) and the polycarbonate resin (A-1) was obtained in the same manner as the laminate (E11) obtained in Example 1 except that the resin (D11) was used instead of the resin (B11). The total thickness of the resulting laminate (F11) was 1000 μm, the thickness near the center of the surface layer was 40 μm, and the warpage variation under a high temperature and high humidity environment was -57 μm.

In addition, a laminate (F12) of the resin (D11) and the polycarbonate resin (A-1) was obtained in the same manner as the laminate (E12) obtained in Example 1 by using the resin (D11) instead of the resin (B11). The total thickness of the resulting laminate (F12) was 1000 μm, the thickness near the center of the surface layer was 50 μm, and the warpage variation under a high temperature and high humidity environment was -84 μm.

Similarly, a laminate (F13) of the resin (D11) and the polycarbonate resin (A-1) was obtained in the same manner as the laminate (E13) obtained in Example 1 by using the resin (D11) instead of the resin (B11). The total thickness of the resulting laminate (F13) was 1000 μm, the thickness near the center of the surface layer was 60 μm, and the warpage variation under a high temperature and high humidity environment was -121 μm.

Similarly, a laminate (F14) of the resin (D11) and the polycarbonate resin (A-1) was obtained in the same

manner as the laminate (E14) obtained in Example 1 by using the resin (D11) instead of the resin (B11). The total thickness of the resulting laminate (F14) was 1000 μm, the thickness near the center of the surface layer was 70 μm, and the warpage variation under a high temperature and high humidity environment was -181 μm.

Comparative example 2

A laminate (F15) of a resin (D12) and the polycarbonate resin (A-1) was obtained in the same manner as the laminate (E11) obtained in Example 1 except that the resin (D12) was used instead of the resin (B11). The total thickness of the resulting laminate (F15) was 1000 μm, the thickness near the center of the surface layer was 40 μm, and the warpage variation under a high temperature and high humidity environment was -116 μm.

In addition, a laminate (F16) of the resin (D12) and the polycarbonate resin (A-1) was obtained in the same manner as the laminate (E12) obtained in Example 1 by using the resin (D12) instead of the resin (B11). The total thickness of the resulting laminate (F16) was 1000 μm, the thickness near the center of the surface layer was 50 μm, and the warpage variation under a high temperature and high humidity environment was -193 μm.

Similarly, a laminate (F17) of the resin (D12) and the polycarbonate resin (A-1) was obtained in the same manner as the laminate (E13) obtained in Example 1 by using the resin (D12) instead of the resin (B11). The total thickness of the resulting laminate (F17) was 1000 μm, the thickness near the center of the surface layer was 60 μm, and the warpage variation under a high temperature and high humidity environment was -264 μm.

Similarly, a laminate (F18) of the resin (D12) and the polycarbonate resin (A-1) was obtained in the same manner as the laminate (E14) obtained in Example 1 by using the resin (D12) instead of the resin (B11). The total thickness of the resulting laminate (F18) was 1000 μm, the thickness near the center of the surface layer was 70 μm, and the warpage variation under a high temperature and high humidity environment was -351 μm.

Comparative example 3

A laminate (F19) of a resin (D13) and the polycarbonate resin (A-1) was obtained in the same manner as the laminate (E11) obtained in Example 1 except that the resin (D13) was used instead of the resin (B11). The total thickness of the resulting laminate (F19) was 1000 μm, the thickness near the center of the surface layer was 40 μm, and the warpage variation under a high temperature and high humidity environment was -34 μm.

In addition, a laminate (F20) of the resin (D13) and the polycarbonate resin (A-1) was obtained in the same manner as the laminate (E12) obtained in Example 1 by using the resin (D13) instead of the resin (B11). The total thickness of the resulting laminate (F20) was 1000 μm, the thickness near the center of the surface layer was 50 μm, and the warpage variation under a high temperature and high humidity environment was -108 μm.

Similarly, a laminate (F21) of the resin (D13) and the polycarbonate resin (A-1) was obtained in the same manner as the laminate (E13) obtained in Example 1 by using the resin (D13) instead of the resin (B11). The total thickness of the resulting laminate (F21) was 1000 μm, the thickness near the center of the surface layer was 60 μm, and the warpage variation under a high temperature and high humidity environment was -186 μm.

Similarly, a laminate (F22) of the resin (D13) and the polycarbonate resin (A-1) was obtained in the same manner as the laminate (E14) obtained in Example 1 by using the resin (D13) instead of the resin (B11). The total thickness of the resulting laminate (F22) was 1000 μm, the thickness near the center of the surface layer was 70 μm, and the warpage variation under a high temperature and high humidity environment was -288 μm.

The results obtained in Examples and Comparative examples are shown in Tables 2 and 3. Moreover, the warpage variation with respect to the variation in the thickness of the surface layer of the laminates obtained in the examples and the comparative examples are summarized in Figures 1-3.

[Table 2]

| Example | Composition of layer | Copolymer (b1) | Composition ratio of Copolymer (b1) [%] | | | Copolymer (b2) | Composition ratio of Copolymer (b2) [%] | | | Copolymer (b3) | Composition ratio of Copolymer (b3) [%] | | | Methyl methacrylate resin (b4) | Composition ratio of methyl methacrylate (b4) [%] | Weight ratio of thermoplastic resin (B) [%] | | |
|---|---|---|---|---|---|---|---|---|---|---|---|---|---|---|---|---|---|---|
| | | | Styrene | Maleic anhydride | MMA | | Styrene | N-phenyl maleimide | MMA | | Styrene | Maleic anhydride | MMA | | MMA | Copolymer (b1) | Copolymer (b2) or (b3) | Acrylic resin (b4) |
| Example 1 | B11/A-1 | b1-1 | 65 | 15 | 20 | b2-1 | 4 | 15 | 81 | | | | | | | 75 | 25 | |
| Example 2 | B12/A-1 | b1-2 | 57 | 23 | 20 | b2-1 | 4 | 15 | 81 | | | | | | | 60 | 40 | |
| Example 3 | B13/A-1 | b1-3 | 55 | 20 | 25 | b2-1 | 4 | 15 | 81 | | | | | | | 60 | 40 | |
| Example 4 | B14/A-1 | b1-1 | 65 | 15 | 20 | | | | | b3-1 | 16 | 8 | 76 | | | 30 | 70 | |
| Example 5 | B15/A-1 | b1-2 | 57 | 23 | 20 | | | | | b3-1 | 16 | 8 | 76 | | | 20 | 80 | |
| Example 6 | B16/A-1 | b1-3 | 55 | 20 | 25 | | | | | b3-1 | 16 | 8 | 76 | | | 20 | 80 | |
| Example 7 | B17/A-1 | b1-1 | 65 | 15 | 20 | | | | | b3-2 | 15 | 9 | 76 | | | 30 | 70 | |
| Example 8 | B18/A-1 | b1-2 | 57 | 23 | 20 | | | | | b3-2 | 15 | 9 | 76 | | | 20 | 80 | |
| Example 9 | B19/A-1 | b1-3 | 55 | 20 | 25 | | | | | b3-2 | 15 | 9 | 76 | | | 20 | 80 | |
| Comparative example 1 | D11/A-1 | b1-1 | 65 | 15 | 20 | | | | | | | | | b4-1 | 100 | 75 | | 25 |
| Comparative example 2 | D12/A-1 | b1-2 | 57 | 23 | 20 | | | | | | | | | b4-1 | 100 | 60 | | 40 |
| Comparative example 3 | D13/A-1 | b1-3 | 57 | 23 | 20 | | | | | | | | | b4-1 | 100 | 60 | | 40 |

[Table 3]

| Example | Composition of layer | Laminate | Thickness B/A (μm) | Warpage variation under a high temperature and a high humidity environment (μm) | Example | Composition of layer | Laminate | Thickness B/A (μm) | Warpage variation under a high temperature and a high humidity environment (μm) | Example | Composition of layer | Laminate | Thickness B/A (μm) | Warpage variation under a high temperature and a high humidity environment (μm) |
|---|---|---|---|---|---|---|---|---|---|---|---|---|---|---|
| Example 1 | B11/A-1 | E11 | 40/960 | -38 | Example 4 | B14/A-1 | E23 | 40/960 | +28 | Example 7 | B17/A-1 | E35 | 40/960 | +25 |
| | | E12 | 50/950 | -53 | | | E24 | 50/950 | +12 | | | E36 | 50/950 | +12 |
| | | E13 | 60/940 | -65 | | | E25 | 60/940 | -8 | | | E37 | 60/940 | -19 |
| | | E14 | 70/930 | -76 | | | E26 | 70/930 | -21 | | | E38 | 70/930 | -31 |
| Example 2 | B12/A-1 | E15 | 40/960 | +138 | Example 5 | B15/A-1 | E27 | 40/960 | +12 | Example 8 | B18/A-1 | E39 | 40/960 | +18 |
| | | E16 | 50/950 | +65 | | | E28 | 50/950 | -28 | | | E40 | 50/950 | -4 |
| | | E17 | 60/940 | +7 | | | E29 | 60/940 | -40 | | | E41 | 60/940 | -33 |
| | | E18 | 70/930 | -55 | | | E30 | 70/930 | -75 | | | E42 | 70/930 | -72 |
| Example 3 | B13/A-1 | E19 | 40/960 | -57 | Example 6 | B16/A-1 | E31 | 40/960 | +47 | Example 9 | B19/A-1 | E43 | 40/960 | +37 |
| | | E20 | 50/950 | -98 | | | E32 | 50/950 | +28 | | | E44 | 50/950 | +18 |
| | | E21 | 60/940 | -135 | | | E33 | 60/940 | +1 | | | E45 | 60/940 | -35 |
| | | E22 | 70/930 | -194 | | | E34 | 70/930 | -48 | | | E46 | 70/930 | -69 |

| Example | Composition of layer | Laminate | Thickness B/A (μm) | Warpage variation under a high temperature and a high humidity environment (μm) |
|---|---|---|---|---|
| Comparative example 1 | D11/A-1 | F11 | 40/960 | -57 |
| | | F12 | 50/950 | -84 |
| | | F13 | 60/940 | -121 |
| | | F14 | 70/930 | -181 |
| Comparative example 2 | D12/A-1 | F15 | 40/960 | -116 |
| | | F16 | 50/950 | -193 |
| | | F17 | 60/940 | -264 |
| | | F18 | 70/930 | -351 |
| Comparative example 3 | D13/A-1 | F19 | 40/960 | -34 |
| | | F20 | 50/950 | -108 |
| | | F21 | 60/940 | -186 |
| | | F22 | 70/930 | -288 |

As described above, the resin laminate of the present invention is obtained by layering a thermoplastic resin onto a polycarbonate-based resin layer, where a thermoplastic resin containing a copolymer (b1) including an aromatic vinyl monomer unit, an unsaturated dicarboxylic anhydride monomer unit and an acrylic compound monomer unit, and a copolymer (b2) including an aromatic vinyl monomer unit, a N-substituted maleimide monomer unit and an acrylic compound monomer unit was used as this thermoplastic resin so that advantageous effects of gaining excellent warping deformation resistance even under exposure to a high temperature and a high humidity and the effect of variation in the thickness of the surface layer on the warping deformation resistance being small can be achieved.

For example, as can be appreciated from Figure 1, the incline of the warpage variation under a high temperature and high humidity condition with respect to the difference in the thickness of the surface layer is less steep for the laminate using the thermoplastic resin containing the copolymers (b1-1) and (b2-1) (Example 1) as compared to the laminate using the thermoplastic resin containing the copolymer (b1-1) and the methyl methacrylate resin (b4-1) (Comparative example 1)

Moreover, as can be appreciated from Figure 2, the incline of the warpage variation under a high temperature and high humidity condition with respect to the thickness of the surface layer is also less steep for the laminate using the thermoplastic resin containing the copolymers (b1-2) and (b2-1) (Example 2) as compared to the laminate using the thermoplastic resin containing the copolymer (b1-2) and the methyl methacrylate resin (b4-1) (Comparative example 2).

Similarly, as can be appreciated from Figure 3, the incline of the warpage variation under a high temperature and high humidity condition with respect to the thickness of the surface layer is also less steep for the laminate using the thermoplastic resin containing the copolymers (b1-3) and (b2-1) (Example 3) as compared to the laminate using the thermoplastic resin containing the copolymer (b1-3) and the methyl methacrylate resin (b4-1) (Comparative example 3).

As described above, the resin laminate of the present invention is obtained by layering a thermoplastic resin onto a polycarbonate-based resin layer, where a thermoplastic resin containing a copolymer (b1) including an aromatic vinyl monomer unit, an unsaturated dicarboxylic anhydride monomer unit and an acrylic compound monomer unit, and a copolymer (b3) including an aromatic vinyl monomer unit, an unsaturated dicarboxylic anhydride monomer unit and an acrylic compound monomer unit at a different composition ratio from that of the copolymer (b1) was used as this thermoplastic resin so that advantageous effects of gaining excellent warping deformation resistance even under exposure to a high temperature and a high humidity and the effect of variation in the thickness of the surface layer on the warping deformation resistance being small can be achieved.

For example, as can be appreciated from Figure 1, the incline of the warpage variation under a high temperature and high humidity condition with respect to the difference in the thickness of the surface layer is less steep for the laminates using the thermoplastic resin containing the copolymers (b1-1) and (b3-1) and the thermoplastic resin containing the copolymers (b1-1) and (b3-2), respectively (Examples 4 and 7) as compared to the laminate using the thermoplastic resin containing the copolymer (b1-1) and the methyl methacrylate resin (b4-1) (Comparative example 1).

Moreover, as can be appreciated from Figure 2, the incline of the warpage variation under a high temperature and high humidity condition with respect to the thickness of the surface layer is also less steep for the laminates using the thermoplastic resin containing the copolymers (b1-2) and (b3-1) and the thermoplastic resin containing the copolymers (b1-2) and (b3-2), respectively (Examples 5 and 8) as compared to the laminate using the thermoplastic resin containing the copolymer (b1-2) and the methyl methacrylate resin (b4-1) (Comparative example 2).

Similarly, as can be appreciated from Figure 3, the incline of the warpage variation under a high temperature and high humidity condition with respect to the thickness of the surface layer is also less steep for the laminates using the thermoplastic resin containing the copolymers (b1-3) and (b3-1) and the thermoplastic resin containing the copolymers (b1-3) and (b3-2), respectively (Examples 6 and 9) as compared to the laminate using the thermoplastic resin containing the copolymer (b1-3) and the methyl methacrylate resin (b4-1) (Comparative example 3).

Thus, the laminate of the present invention is capable of reducing the effect of the variation in the thickness of the surface layer on the warpage variation under a high temperature and high humidity condition, as compared to a conventional laminate that comprises a thermoplastic resin containing: a copolymer including an aromatic vinyl monomer unit, an unsaturated dicarboxylic anhydride monomer unit and an acrylic compound monomer unit; and a methyl methacrylate resin, and a polycarbonate.

Accordingly, the resin laminate of the present invention in which the thickness of the surface layer has small effect on the warping deformation resistance is capable of achieving a sufficient warpage resistant effect under a high temperature and high humidity condition not only in a part of the resin laminate but as the whole transparent resin laminate so that it that can favorably be used as a transparent base material or a transparent protective material as a substitute of glass, particularly as a touch screen front panel protective plate or a front panel plate for an OA equipment or a portable electronic equipment.

## Claims

1. A resin laminate comprising a thermoplastic resin (B) and a polycarbonate-based resin (A) sheet comprising a polycarbonate resin as the main component, wherein the thermoplastic resin (B) is laminated on at least one side of the polycarbonate-based resin (A) sheet,
wherein the thermoplastic resin (B) comprises:

    a copolymer (b1) containing 45-85 mass% of an aromatic vinyl monomer unit, 5-50 mass% of an unsaturated dicarboxylic anhydride monomer unit and 5-35 mass% of an acrylic compound monomer unit; and
    either a copolymer (b2) containing 1-30 mass% of an aromatic vinyl monomer unit, 5-45 mass% of a N-substituted maleimide monomer unit and 25-94 mass% of an acrylic compound monomer unit, or a copolymer (b3) containing 5-40 mass% of an aromatic vinyl monomer unit, 1-50 mass% of an unsaturated dicarboxylic anhydride monomer unit and 45-94 mass% of an acrylic compound monomer unit.

2. The resin laminate according to Claim 1, wherein the content of the copolymer (b1) is 5-95 parts by mass, and the content of either the copolymer (b2) or the copolymer (b3) is 95-5 parts by mass, with respect to a total content of 100 parts by mass of the copolymer (b1) and either the copolymer (b2) or the copolymer (b3) in the thermoplastic resin (B).

3. The resin laminate according to Claim 1 or 2, wherein the thermoplastic resin (B) is a polymer alloy of the copolymer (b1) and either the copolymer (b2) or the copolymer (b3) .

4. The resin laminate according to any one of Claims 1-3, wherein the aromatic vinyl monomer unit contained in the copolymers (b1), (b2) and (b3) is styrene.

5. The resin laminate according to any one of Claims 1-4, wherein the acrylic compound monomer unit contained in the copolymers (b1), (b2) and (b3) is methacrylate ester.

6. The resin laminate according to any one of Claims 1-5, wherein the N-substituted maleimide monomer unit contained in the copolymer (b2) is N-phenyl maleimide.

7. The resin laminate according to any one of Claims 1-6, wherein the unsaturated dicarboxylic anhydride monomer unit contained in the copolymers (b1) and (b3) is a maleic anhydride.

8. The resin laminate according to any one of Claims 1-7, wherein the thickness of the thermoplastic resin (B) layer is 10-250 μm and the total thickness of the resin laminate is in a range of 0.05-3.5 mm.

9. The resin laminate according to any one of Claims 1-8, wherein the proportion of the thickness of the thermoplastic resin (B) layer to the total thickness of the resin laminate is less than 30%.

10. The resin laminate according to any one of Claims 1-9, wherein the weight-average molecular weight (Mw) of the copolymers (b1) and (b2) is 50,000-300,000,
wherein the weight-average molecular weight (Mw) of the copolymers (b1) and (b2) was determined by gel permeation chromatography using THF or chloroform as a solvent.

11. The resin laminate according to any one of Claims 1-10, wherein the weight-average molecular weight of the polycarbonate-based resin (A) is 15,000-75,000,
wherein the weight-average molecular weight of the polycarbonate-based resin (A) is determined as described below using the following conditions:

| | |
|---|---|
| Device | "Aliance" from Waters |
| Columns | "Shodex K-805L" (2 columns) from Showa Denko |
| Detector | UV detector: 254 nm |
| Eluent | Chloroform |

Subsequent to determination using polystyrene (PS) as a reference polymer, the relationship between the elution time and the molecular weight of polycarbonate (A) is determined by universal calibration method to obtain a calibration curve. Then, the elution curve (chromatogram) of polycarbonate (A) is determined under the same conditions as those for the calibration curve to determine respective average molecular weights from the elution time (molecular weight) and the peak area (number of molecules) at that elution time. The weight-average molecular weight is expressed as follows provided that Ni represents the number of molecules of molecular weight Mi. Furthermore, the following conversion equation was used.
*(Weight-average molecular weight)*

$$Mw = \Sigma\ (NiMi^2)/\Sigma\ (NiMi)$$

*(Conversion equation)*
$MPC = 0.47822MPS^{1.01470}$
*In this equation, MPC represents the molecular weight of polycarbonate (A) while MPS represents the molecular weight of polystyrene (PS).*

**12.** The resin laminate according to any one of Claims 1-11, wherein at least one of the thermoplastic resin (B) layer and the polycarbonate-based resin (A) layer contains an ultraviolet absorber.

**13.** The resin laminate according to any one of Claims 1-12, further comprising a hard coat layer on the surface of the thermoplastic resin (B) layer.

**14.** The resin laminate according to any one of Claims 1-13, wherein either or both sides of the resin laminate are subjected to one or more of an anti-fingerprint treatment, an anti-reflection treatment, an anti-glare treatment, a weatherability treatment, an antistatic treatment and an antifouling treatment.

**15.** A transparent substrate material comprising the resin laminate according to any one of Claims 1-14.

**16.** A transparent protective material comprising the resin laminate according to any one of Claims 1-14.

**17.** A touch screen front panel protective plate comprising the resin laminate according to any one of Claims 1-14.

**18.** A front panel plate for an OA equipment or a portable electronic equipment, comprising the resin laminate according to any one of Claims 1-14.

**Patentansprüche**

**1.** Harzlaminat, umfassend ein thermoplastisches Harz (B) und eine Platte aus einem Polycarbonat-basierten Harz (A) umfassend ein Polycarbonatharz als Hauptkomponente, wobei das thermoplastische Harz (B) auf mindestens eine Seite der Platte aus Polycarbonat-basiertem Harz (A) laminiert ist,
wobei das thermoplastische Harz (B) umfasst:

ein Copolymer (b1) enthaltend 45-85 Massen-% einer aromatischen Vinylmonomereinheit, 5-50 Massen-% einer ungesättigten Dicarbonsäureanhydridmonomereinheit und 5-35 Massen-% einer Monomereinheit einer Acrylverbindung; und
entweder ein Copolymer (b2) enthaltend 1-30 Massen-% einer aromatischen Vinylmonomereinheit, 5-45 Massen-% einer N-substituierten Maleimidmonomereinheit und 25-94 Massen-% einer Monomereinheit einer Acrylverbindung, oder ein Copolymer (b3) enthaltend 5-40 Massen-% einer aromatischen Vinylmonomereinheit, 1-50 Massen-% einer ungesättigten Dicarbonsäureanhydridmonomereinheit und 45-94 Massen-% einer Monomereinheit einer Acrylverbindung.

**2.** Harzlaminat gemäß Anspruch 1, wobei der Gehalt des Copolymers (b1) 5-95 Masseteile beträgt, und der Gehalt entweder des Copolymers (b2) oder des Copolymers (b3) 95-5 Massenteile beträgt, bezogen auf den Gesamtgehalt von 100 Massenteilen des Copolymers (b1) und entweder des Copolymers (b2) oder des Copolymers (b3) in dem thermoplastischen Harz (B).

**3.** Harzlaminat gemäß Anspruch 1 oder 2, wobei das thermoplastische Harz (B) eine Polymerlegierung des Copolymers (b1) und entweder des Copolymers (b2) oder des Copolymers (b3) ist.

**4.** Harzlaminat gemäß einem der Ansprüche 1-3, wobei die in den Copolymeren (b1), (b2) und (b3) enthaltende aromatische Vinylmonomereinheit Styrol ist.

**5.** Harzlaminat gemäß einem der Ansprüche 1-4, wobei die in den Copolymeren (b1), (b2) und (b3) enthaltende Monomereinheit einer Acrylverbindung Methacrylatester ist.

**6.** Harzlaminat gemäß einem der Ansprüche 1-5, wobei die im Copolymer (b2) enthaltende *N*-substituierte Maleimidmonomereinheit *N*-Phenylmaleimid ist.

**7.** Harzlaminat gemäß einem der Ansprüche 1-6, wobei die in den Copolymeren (b1) und (b3) enthaltende ungesättigte Dicarbonsäureanhydridmonomereinheit Maleinsäureanhydrid ist.

**8.** Harzlaminat gemäß einem der Ansprüche 1-7, wobei die Dicke der Schicht des thermoplastischen Harzes (B) 10-250 μm beträgt und die Gesamtdicke des Harzlaminats in einem Bereich von 0,05-3,5 mm liegt.

**9.** Harzlaminat gemäß einem der Ansprüche 1-8, wobei der Anteil der Dicke der Schicht des thermoplastischen Harzes (B) an der Gesamtdicke des Harzlaminats weniger als 30% beträgt.

**10.** Harzlaminat gemäß einem der Ansprüche 1-9, wobei das gewichtsgemittelte Molekulargewicht (Mw) der Copolymere (b1) und (b2) 50.000-300.000 beträgt,
wobei das gewichtsgemittelte Molekulargewicht (Mw) der Copolymere (b1) und (b2) mittels Gelpermeationschromatographie unter Verwendung von THF oder Chloroform als Lösungsmittel bestimmt wird.

**11.** Harzlaminat gemäß einem der Ansprüche 1-10, wobei das gewichtsgemittelte Molekulargewicht (Mw) des Polycarbonat-basierten Harzes (A) 15.000-75.000 beträgt,
wobei das gewichtsgemittelte Molekulargewicht (Mw) des Polycarbonat-basierten Harzes (A) wie unten beschrieben unter Verwendung der folgenden Bedingungen bestimmt wird:

| | |
|---|---|
| Gerät | "Aliance" von Waters |
| Säulen | "Shodex K-805L" (2 Säulen) von Showa Denko |
| Detektor | UV-Detektor: 254 nm |
| Eluent | Chloroform |

Im Anschluss an die Bestimmung unter Verwendung von Polystyrol (PS) als Referenzpolymer wird das Verhältnis zwischen der Elutionszeit und dem Molekulargewicht des Polycarbonats (A) mit einer universellen Kalibrationsmethode bestimmt, um eine Kalibrationskurve zu erhalten. Dann wird die Elutionskurve (Chromatogramm) des Polycarbonats (A) unter den gleichen Bedingungen wie für die Kalibrationskurve bestimmt, um die jeweiligen durchschnittlichen Molekulargewichte aus der Elutionszeit (Molekulargewicht) und der Peakfläche (Anzahl der Moleküle) zu dieser Elutionszeit zu bestimmen. Das gewichtsgemittelte Molekulargewicht wird wie folgt ausgedrückt, wobei Ni die Anzahl der Moleküle mit dem Molekulargewicht Mi darstellt. Außerdem wurde die folgende Umrechnungsgleichung verwendet. *(gewichtsgemitteltes Molekulargewicht)*

$$Mw = \Sigma\ (NiMi^2)/\Sigma\ (NiMi)$$

*(Umrechnungsgleichung)*
*MPC = 0,47822M-PS$^{1,01470}$*
*In dieser Gleichung stellt MPC das Molekulargewicht des Polycarbonats (A) dar, während MPS das Molekulargewicht des Polystyrols (PS) darstellt.*

**12.** Harzlaminat gemäß einem der Ansprüche 1-11, wobei mindestens eine der Schicht des thermoplastischen Harzes (B) und der Schicht des Polycarbonat-basierten Harzes (A) einen Ultraviolettabsorber enthält.

13. Harzlaminat gemäß einem der Ansprüche 1-12, ferner umfassend eine harte Überzugsschicht auf der Oberfläche der Schicht des thermoplastischen Harzes (B).

14. Harzlaminat gemäß einem der Ansprüche 1-13, wobei entweder eine oder beide Seiten des Harzlaminats einer oder mehreren einer Anti-Fingerabdruck-Behandlung, einer Antireflexionsbehandlung, einer Blendschutzbehandlung, einer Witterungsbeständigkeitsbehandlung, einer antistatischen Behandlung und einer Antifouling-Behandlung unterzogen werden.

15. Transparentes Substratmaterial, umfassend das Harzlaminat gemäß einem der Ansprüche 1-14.

16. Transparentes Schutzmaterial, umfassend das Harzlaminat gemäß einem der Ansprüche 1-14.

17. Schutzplatte für das Frontpanel eines Touchscreens, umfassend das Harzlaminat gemäß einem der Ansprüche 1-14.

18. Frontpanelplatte für ein OA-Gerät oder ein tragbares elektronisches Gerät, umfassend das Harzlaminat gemäß einem der Ansprüche 1-14.

**Revendications**

1. Stratifié de résine comprenant une résine thermoplastique (B) et une feuille de résine à base de polycarbonate (A) comprenant une résine de polycarbonate en tant que composant principal, dans lequel la résine thermoplastique (B) est stratifiée sur au moins un côté de la feuille de résine à base de polycarbonate (A),
dans lequel la résine thermoplastique (B) comprend :

    un copolymère (b1) contenant de 45-85 % en masse d'une unité de monomère de vinyle aromatique, de 5-50% en masse d'une unité de monomère anhydride dicarboxylique insaturé et de 5-35% en masse d'une unité de monomère de composé acrylique ; et
    soit un copolymère (b2) contenant de 1-30 % en masse d'une unité de monomère de vinyle aromatique, de 5-45% en masse d'une unité de monomère de maléimide substitué en N et de 25-94 % en masse d'une unité de monomère de composé acrylique, soit un copolymère (b3) contenant de 5-40% en masse d'une unité de monomère de vinyle aromatique, de 1-50% en masse d'une unité de monomère anhydride dicarboxylique insaturé et de 45-94 % en masse d'une unité de monomère de composé acrylique.

2. Stratifié de résine selon la revendication 1, dans lequel la teneur en copolymère (b1) est de 5-95 parts en masse, et la teneur en copolymère (b2) ou en copolymère (b3) est de 95-5 parts en masse, par rapport à une teneur totale de 100 parts en masse du copolymère (b1) et du copolymère (b2) ou du copolymère (b3) dans la résine thermoplastique (B).

3. Stratifié de résine selon la revendication 1 ou 2, dans lequel la résine thermoplastique (B) est un alliage polymère du copolymère (b1) et du copolymère (b2) ou du copolymère (b3).

4. Stratifié de résine selon l'une quelconque des revendications 1-3, dans lequel l'unité de monomère de vinyle aromatique dans les copolymères (b1), (b2) et (b3) est du styrène.

5. Stratifié de résine selon l'une quelconque des revendications 1-4, dans lequel l'unité de monomère de composé acrylique dans les copolymères (b1), (b2) et (b3) est de l'ester de méthacrylate.

6. Stratifié de résine selon l'une quelconque des revendications 1-5, dans lequel l'unité de monomère de maléimide substitué en N contenue dans le copolymère (b2) est du maléimide de N-phényle.

7. Stratifié de résine selon l'une quelconque des revendications 1-6, dans lequel l'unité de monomère anhydride dicarboxylique insaturé contenue dans les copolymères (b1) et (b3) est un anhydride maléique.

8. Stratifié de résine selon l'une quelconque des revendications 1-7, dans lequel l'épaisseur de la couche de résine thermoplastique (B) est de 10-250 $\mu$m et l'épaisseur totale du stratifié de résine est dans une plage de 0,05-3,5 mm.

9. Stratifié de résine selon l'une quelconque des revendications 1-8, dans lequel la proportion de l'épaisseur de la

couche de résine thermoplastique (B) sur l'épaisseur totale du stratifié de résine est inférieure à 30 %.

**10.** Stratifié de résine selon l'une quelconque des revendications 1-9, dans lequel le poids moléculaire moyen en poids (Mw) des copolymères (b1) et (b2) est de 50 000-300 000,
dans lequel le poids moléculaire moyen en poids (Mw) des copolymères (b1) et (b2) a été déterminé par chromatographie par perméation sur gel en utilisant du THF ou du chloroforme comme solvant.

**11.** Stratifié de résine selon l'une quelconque des revendications 1-10, dans lequel le poids moléculaire moyen en poids de la résine à base de polycarbonate (A) est de 15 000-75 000,
dans lequel le poids moléculaire moyen en poids de la résine à base de polycarbonate (A) est déterminé comme décrit ci-dessous à l'aide des conditions suivantes :

| | |
|---|---|
| Dispositif | « Alliance » de chez Waters |
| Colonnes | « Shodex K-805L » (2 Colonnes) De Chez Showa Denko |
| Détecteur | Détecteur UV : 254 nm |
| Éluant | Chloroforme |

A la suite de la détermination en utilisant du polystyrène (PS) comme polymère de référence, la relation entre le temps d'élution et le poids moléculaire de polycarbonate (A) est déterminée par un procédé d'étalonnage universel pour obtenir une courbe d'étalonnage. Puis, la courbe d'élution (chromatogramme) de polycarbonate (A) est déterminée dans les mêmes conditions que celles pour la courbe d'étalonnage pour déterminer des poids moléculaires moyens respectifs à partir du temps d'élution (poids moléculaire) et de la surface de pic (nombre de molécules) à ce temps d'élution. Le poids moléculaire moyen en poids est exprimé comme suit à condition que Ni représente le nombre de molécules de poids moléculaire Mi. En outre, l'équation de conversion suivante a été utilisée.
*(Poids moléculaire moyen en poids)*

$$Mw = \Sigma (NiMi^2) / \Sigma (NiMi)$$

*(Équation de conversion)*
$MPC = 0{,}47822MPS^{1{,}01470}$
*Dans cette équation, MPC représente le poids moléculaire de polycarbonate (A) tandis que MPS représente le poids moléculaire de polystyrène (PS).*

**12.** Stratifié de résine selon l'une quelconque des revendications 1-11, dans lequel au moins l'une parmi la couche de résine thermoplastique (B) et la couche de résine à base de polycarbonate (A) contient un absorbant d'ultraviolets.

**13.** Stratifié de résine selon l'une quelconque des revendications 1-12, comprenant en outre une couche de revêtement dur sur la surface de la couche de résine thermoplastique (B).

**14.** Stratifié de résine selon l'une quelconque des revendications 1-13, dans lequel l'un ou l'autre des côtés, ou les deux, du stratifié de résine sont soumis à un ou plusieurs parmi un traitement anti-empreinte digitale, un traitement antireflet, un traitement anti-éblouissement, un traitement de résistance aux intempéries, un traitement antistatique et un traitement antisalissure.

**15.** Matériau de substrat transparent comprenant le stratifié de résine selon l'une quelconque des revendications 1 à 14.

**16.** Matériau de protection transparent comprenant le stratifié de résine selon l'une quelconque des revendications 1 à 14.

**17.** Plaque de protection de panneau avant d'écran tactile comprenant le stratifié de résine selon l'une quelconque des revendications 1 à 14.

**18.** Plaque de panneau avant pour un équipement OA ou un équipement électronique portatif, comprenant le stratifié de résine selon l'une quelconque des revendications 1 à 14.

Fig. 1

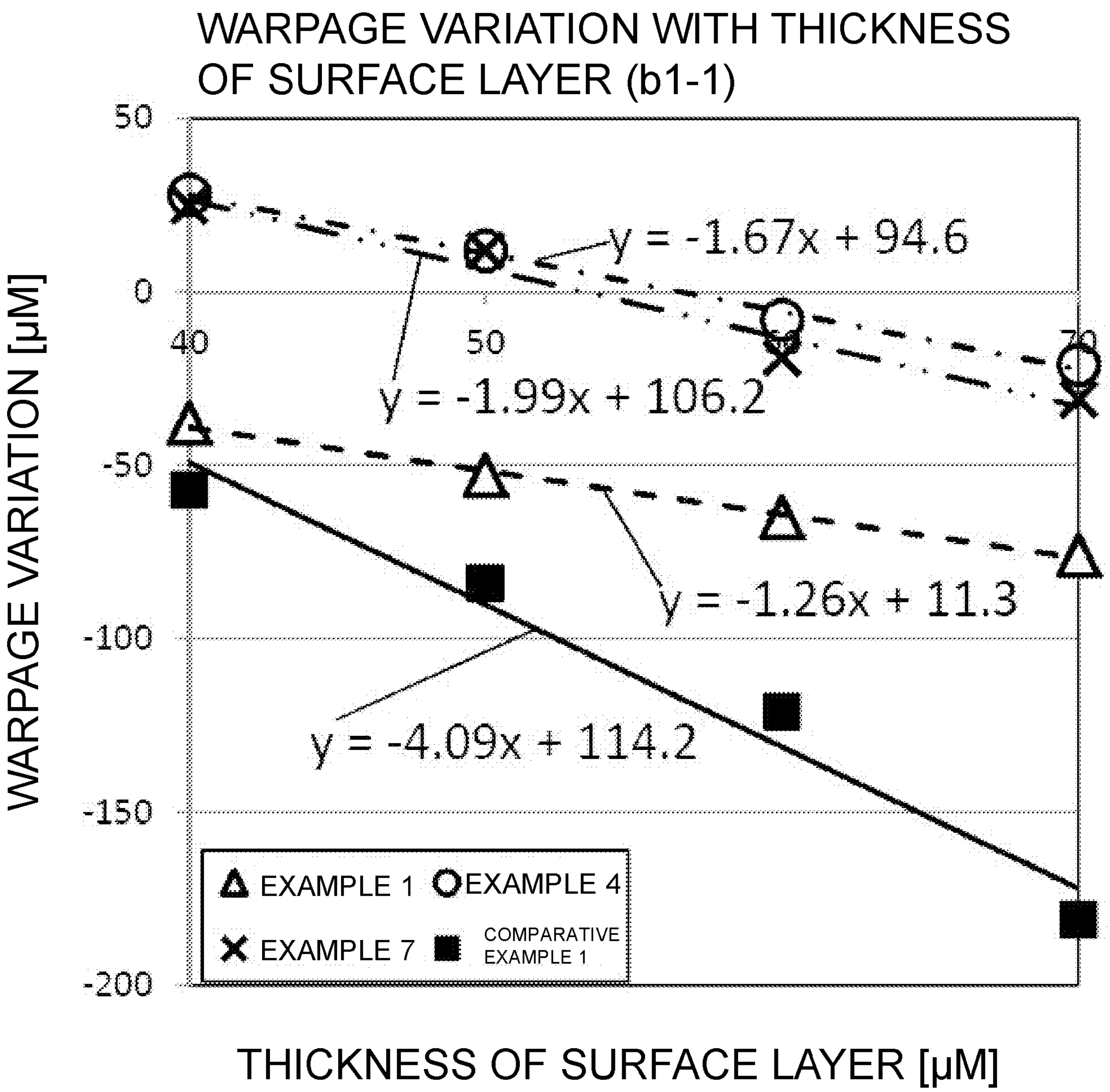
WARPAGE VARIATION WITH THICKNESS OF SURFACE LAYER (b1-1)
50
0
-50
-100
-150
-200
40
50
70
y = -1.67x + 94.6
y = -1.99x + 106.2
y = -1.26x + 11.3
y = -4.09x + 114.2
EXAMPLE 1
EXAMPLE 4
EXAMPLE 7
COMPARATIVE EXAMPLE 1
WARPAGE VARIATION [µM]
THICKNESS OF SURFACE LAYER [µM]

Fig.2

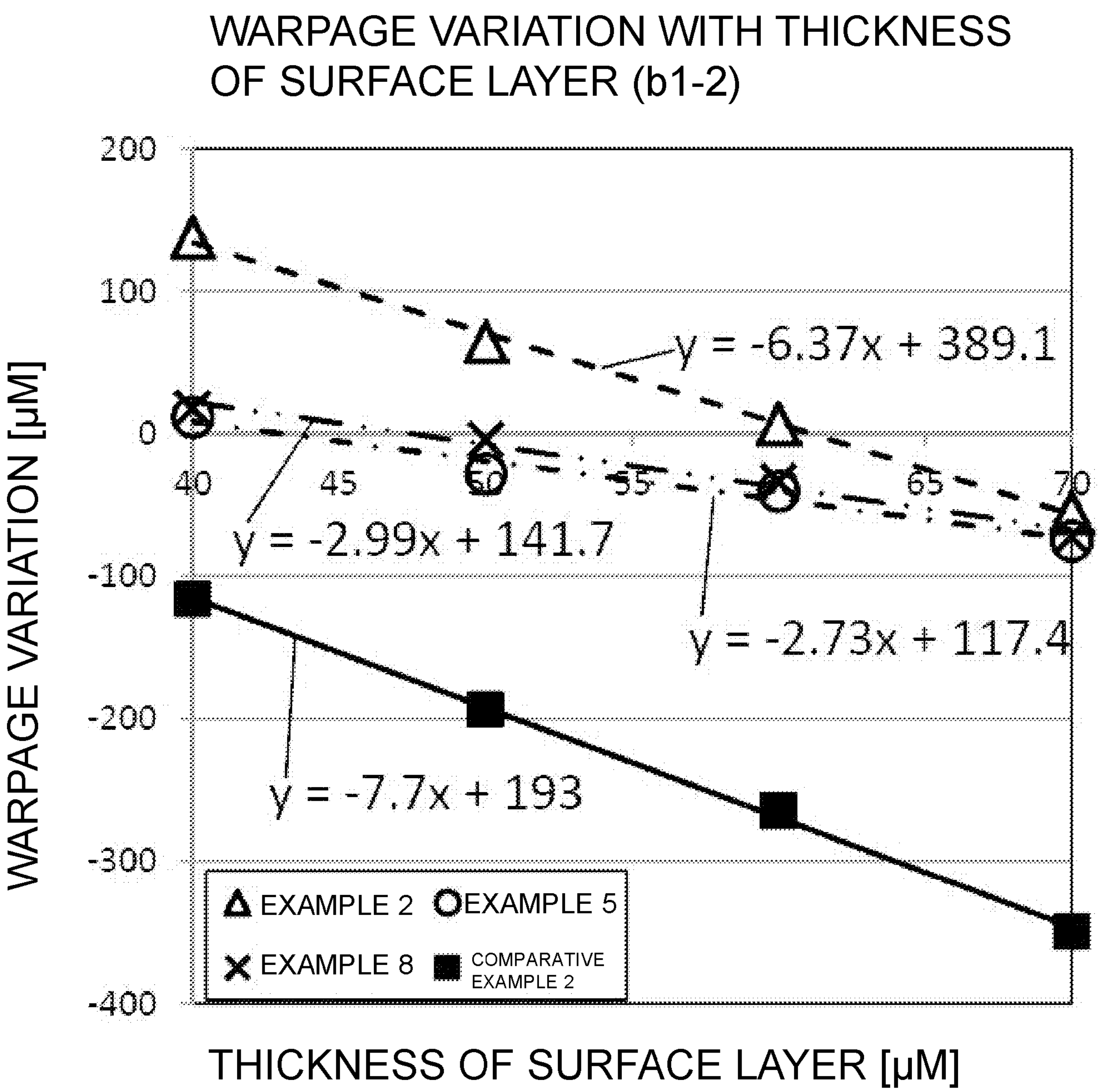
WARPAGE VARIATION WITH THICKNESS OF SURFACE LAYER (b1-2)
WARPAGE VARIATION [μM]
200
100
0
-100
-200
-300
-400
40
45
50
55
65
70
y = -6.37x + 389.1
y = -2.99x + 141.7
y = -2.73x + 117.4
y = -7.7x + 193
EXAMPLE 2
EXAMPLE 5
EXAMPLE 8
COMPARATIVE EXAMPLE 2
THICKNESS OF SURFACE LAYER [μM]

Fig.3

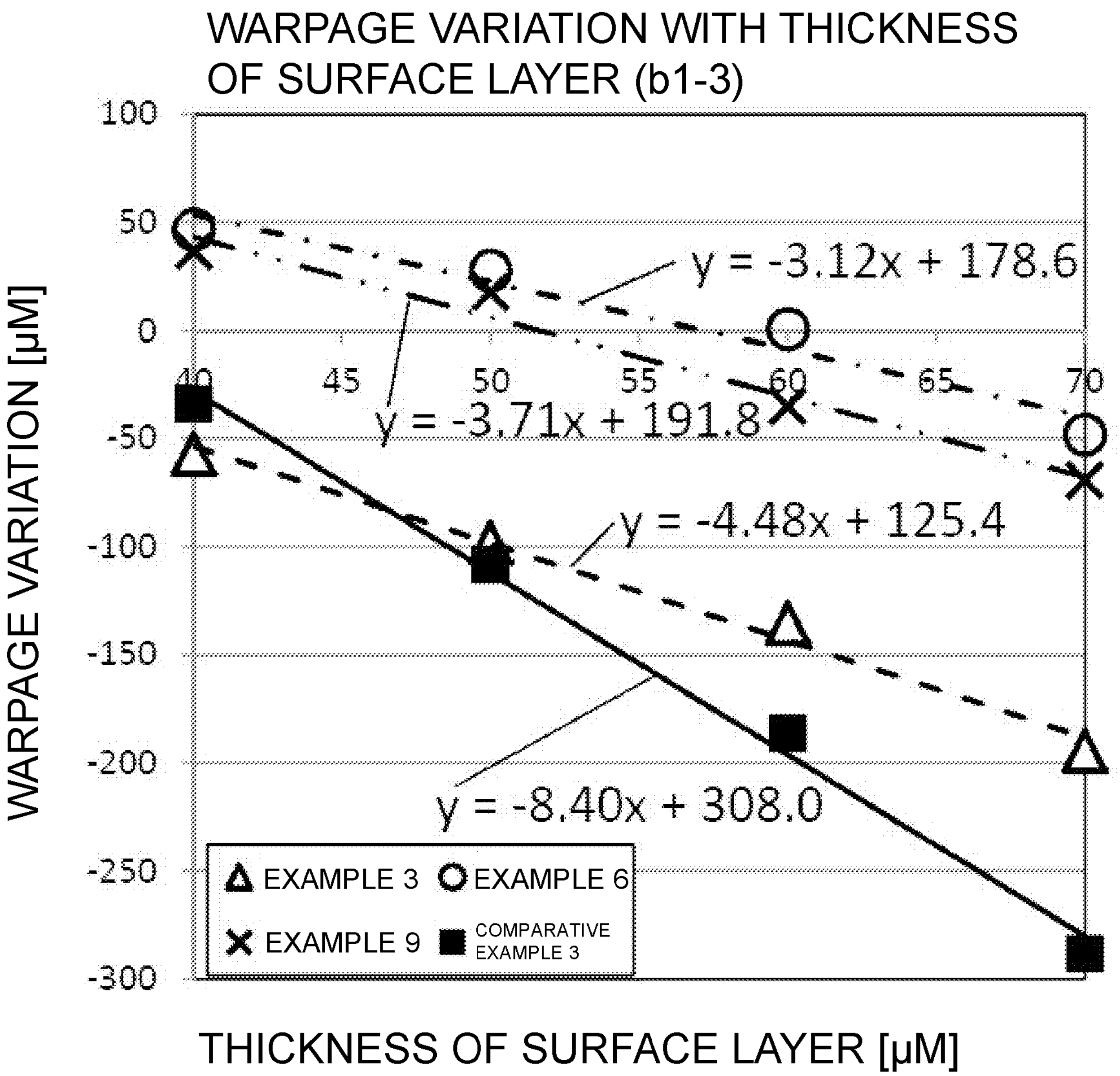
WARPAGE VARIATION WITH THICKNESS OF SURFACE LAYER (b1-3)
WARPAGE VARIATION [μM]
THICKNESS OF SURFACE LAYER [μM]
100
50
0
-50
-100
-150
-200
-250
-300
40
45
50
55
60
65
70
y = -3.12x + 178.6
y = -3.71x + 191.8
y = -4.48x + 125.4
y = -8.40x + 308.0
EXAMPLE 3
EXAMPLE 6
EXAMPLE 9
COMPARATIVE EXAMPLE 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014198454 A
- WO 2015133530 A
- WO 2015079867 A
- JP 2007179018 A